# EUROPEAN PATENT APPLICATION

(11) **EP 4 742 570 A1**
(43) Date of publication of application: **13.05.2026**
(21) Application number: 25214354.0
(22) Date of filing: 07.11.2025
(51) Int. Cl.: H04L 1/00, H04W 84/12

(54) **PHYSICAL LAYER PROTOCOL DATA UNIT FORMAT ADAPTATION FOR ENHANCED LONG RANGE TRANSMISSION**

(30) Priority: 08.11.2024 US 202463717996 P
(71) Applicant: Ofinno, LLC, Reston, VA 20190 (US)
(72) Inventor: LANANTE, Leonardo Alisasis, Philadelphia, 19103 (US); KIM, Jeongki, Philadelphia, 19103 (US); DINAN, Esmael Hejazi, Philadelphia, 19103 (US); BAYKAS, Tuncer, Philadelphia, 19103 (US); ERKUCUK, Serhat, Philadelphia, 19103 (US)
(74) Representative: Westphal, Mussgnug & Partner, Patentanwälte mbB

(57) **Abstract**

A station may send a data unit to an access point using an enhanced long-range format. After using an enhanced long-range format, the access point may determine that channel conditions have improved, for example, based on a signal strength measurement of the data unit. Subsequent data units may be sent without the enhanced long-range format, for example, based on the access point indicating the channel condition improvement.

## Description

### CROSS-REFERENCE TO RELATED APPLICATIONS

This application claims the benefit of U.S. Provisional Application No. 63/717,996, filed on November 8, 2024. The above referenced application is hereby incorporated by reference in its entirety.

### BACKGROUND

An access point communicates with stations. Data units are communicated between the access point and stations.

### SUMMARY

The following summary presents a simplified summary of certain features. The summary is not an extensive overview and is not intended to identify key or critical elements.

Access points may communicate with computing devices, such as stations, by sending data, such as a physical layer protocol data unit. For at least some transmissions, a station may send an extended long-range physical layer protocol data unit which may increase a likelihood of a successful transmission to an access point, for example, if channel conditions are insufficient for a non-extended long-range format and/or if a distance between the station and the access point is greater than or equal to a threshold distance. After sending data using an extended long-range format, the access point may determine that transmission may use a non-extended long-range format, for example, based on improved channel conditions indicated by a signal strength measurement of received data. Subsequent data may be sent without an extended long-range format, for example, based on the access point indicating, to the station, a channel condition improvement. Such an indication may help the station to determine when data may be transmitted without an extended long-range format, which may provide advantages such as increased spatial reuse by stations, reduced channel blocking due to unnecessary use of extended long-range data, and/or improved network performance such as in overlapping basic service set networks.

These and other features and advantages are described in greater detail below.

### BRIEF DESCRIPTION OF THE DRAWINGS

Examples of several of the various embodiments of the present disclosure are described herein with reference to the drawings.
FIG. 1 shows example wireless communication networks.
FIG. 2 shows a block diagram showing example implementations of a station (STA) and an access point (AP).
FIG. 3 shows examples of a Physical Layer Protocol Data Unit (PPDU), such as a non-High Throughput (non-HT) PPDU.
FIG. 4 shows examples of a PPDU, such as a High Efficiency (HE) Single User (SU) PPDU.
FIG. 5 shows an example of a PPDU, such as an Extremely High Throughput (EHT) Multi-user (MU) PPDU.
FIG. 6 shows an example universal signal (U-SIG) field.
FIG. 7 shows an example extended/enhanced long range (ELR) PPDU.
FIG. 8 shows an example of a link adaptation operation.
FIG. 9 shows an example high efficiency (HE) link adaptation control subfield.
FIG. 10 shows an example operating mode (OM) control subfield.
FIG. 11 shows an example channel blocking effect of ELR transmissions.
FIG. 12 shows an example application of ELR transmissions.
FIG. 13 shows an example of a PPDU format adaptation operation.
FIG. 14 shows an example of a PPDU format adaptation operation.
FIG. 15 shows an example of a PPDU format adaptation operation.
FIG. 16 shows an example of a PPDU format adaptation operation.
FIG. 17 shows an example of sending an indication of ELR PPDU disablement.
FIG. 18 shows an example of receiving an indication of ELR PPDU disablement.
FIG. 19 shows an example of a PPDU format operation.
FIG. 20 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

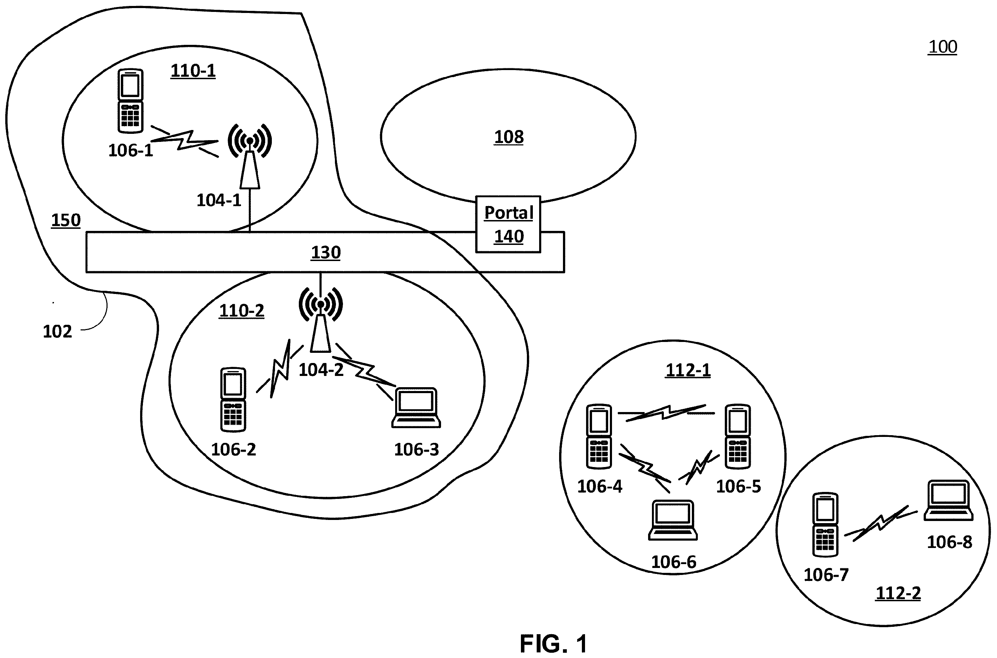

FIG. 1 shows example wireless communication network 100. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station (STA)) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The Aps included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks shown in FIG. 1 may further include one or more ad-hoc networks or independent BSSs (IBSSs). An ad-hoc network or IBSS may be a network that includes a plurality of STAs that are within communication range of each other. The plurality of STAs may be configured so that the plurality of STAs may communicate with each other using direct peer-to-peer communication (e.g., not via an AP).

For example, STAs 106-4, 106-5, and 106-6, in FIG. 1, may be configured to form a first IBSS 112-1. STAs 106-7 and 106-8 may be configured to form a second IBSS 112-2. An IBSS may not include a centralized management entity. The IBSS may not include a centralized management entity, for example, if an IBSS does not include an AP. STAs within an IBSS may be managed in a distributed manner. STAs forming an IBSS may be fixed or mobile.

A STA as a predetermined functional medium may include a medium access control (MAC) layer that complies with an IEEE 802.11 standard. A physical layer interface for a radio medium may be used among the Aps and the non-AP stations (STAs). The STA may also be referred to using various other terms, including mobile terminal, wireless device, wireless transmit/receive unit (WTRU), user equipment (UE), mobile station (MS), mobile subscriber unit, or user. For example, the term "user" may be used to denote a STA participating in uplink Multi-user Multiple Input, Multiple Output (MU MIMO) and/or uplink Orthogonal Frequency Division Multiple Access (OFDMA) transmission.

A physical layer (PHY) protocol data unit (PPDU) may be a composite structure that includes a PHY preamble and a payload in the form of a PLCP service data unit (PSDU). For example, the PSDU may include a PHY Convergence Protocol (PLCP) preamble and header and/or one or more MAC protocol data units (MPDUs). The information provided in the PHY preamble may be used by a receiving device to decode the subsequent data in the PSDU. The preamble fields may be duplicated and sent (e.g., transmitted) in each of the multiple component channels, in instances in which PPDUs are sent (e.g., transmitted) over a bonded channel (channel formed through channel bonding). The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The information provided in, and the format and coding of the non-legacy portion of the preamble may be based on the particular IEEE 802.11 protocol to be used to send (e.g., transmit) the payload.

A frequency band may include one or more sub-bands or frequency channels. For example, PPDUs conforming to the IEEE 802.11n, 802.11ac, 802.11ax and/or 802.11be standard amendments may be sent (e.g., transmitted) over the 2.4 GHz, 5 GHz, and/or 6 GHz bands, each of which may be divided into multiple 20 MHz channels. The PPDUs may be sent (e.g., transmitted) over a physical channel having a minimum bandwidth of 20 MHz. Larger channels may be formed through channel bonding. PPDUs may be sent (e.g., transmitted) over physical channels having bandwidths of 40 MHz, 80 MHz, 160 MHz, or 520 MHz by bonding together multiple 20 MHz channels.

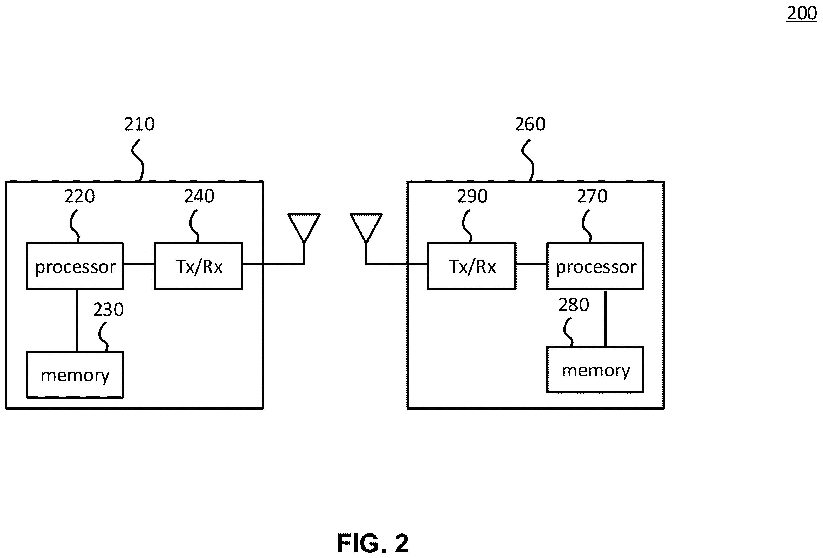

FIG. 2 is a block diagram 200 showing example implementations of a STA 210 and an AP 260. STA 210, as shown in FIG. 2, may include at least one processor 220, a memory 230, and at least one transceiver 240. AP 260 may include at least one processor 270, a memory 280, and at least one transceiver 290. Processor 220/270 may be operatively connected to memory 230/280 and/or to transceiver 240/290.

Processor 220/270 may implement functions of the PHY layer, the MAC layer, and/or the logical link control (LLC) layer of the corresponding device (STA 210 or AP 260). Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations discussed in the present application. Memory 230/280 may be implemented (or positioned) within processor 220/270 or external to processor 220/270. Memory 230/280 may be operatively connected to processor 220/270 via various means known in the art.

Transceiver 240/290 may be configured to send/transmit/receive radio signals. The transceiver 240/290 may implement a PHY layer of the corresponding device (STA 210 or AP 260). STA 210 and/or AP 260 may be a multi-link device (MLD), that is a device capable of operating over multiple links as defined by the IEEE 802.11 standard. STA 210 and/or AP 260 may each implement multiple PHY layers. The multiple PHY layers may be implemented using one or more of transceivers 240/290.

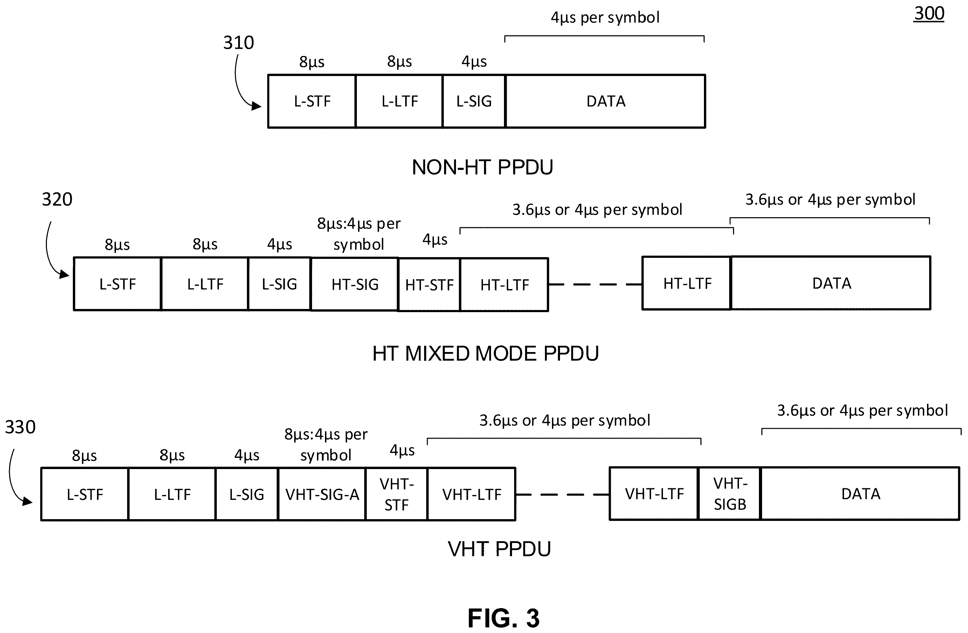

FIG. 3 shows examples of a PPDU, such as a non-High Throughput (non-HT) PPDU 310, a High Throughput (HT) mixed (mode) PPDU 320, and a Very High Throughput (VHT) PPDU 330.

Non-HT PPDU 310 may be used by STAs conforming to one or more standards (e.g., the IEEE 802.11a standard amendment). As shown in FIG. 3, non-HT PPDU 310 may include a non-HT Short Training field (L-STF), a non-HT Long Training field (L-LTF), a non-HT Signal field (L-SIG), and a Data field. The L-STF, L-LTF, and L-SIG fields may form a preamble (e.g., a 20 µs preamble) of non-HT PPDU 310.

The L-STF may be used by a receiver of non-HT PPDU 310 to synchronize with the carrier frequency and frame timing of a transmitter of non-HT PPDU 310 and to adjust the receiver signal gain. The L-LTF may be used by the receiver of non-HT PPDU 310 to determine (e.g., estimate) channel coefficients, for example, to equalize the channel response (e.g., amplitude and phase distortion) in both the L-SIG field and the Data field of non-HT PPDU 310.

The L-SIG may contain parameters needed to demodulate the Data field. The Data field may contain a payload of non-HT PPDU 310. The L-SIG may be processed to generate demodulation parameters of the Data field. For example, the L-SIG may be equalized using the channel coefficients determined/estimated using the L-LTF and/or demodulated to obtain the demodulation parameters of the Data field. The Data field may comprise one or more symbols each having a duration of 4 µs (or any other value). A part of the duration may carry symbol information and a remaining part of the duration may carry a Guard Interval (GI). For example, 3.2 µs may carry symbol information and 0.8 µs may carry a GI, for example, if the duration is 4 µs.

For non-HT PPDUs, the supported (e.g., only supported) bandwidth may be 20 MHz, which may be divided into 64 subcarriers. As such, non-HT PPDU 310 may be encoded using a subcarrier spacing of 20MHz/64 or 312.5kHz.

HT mixed mode PPDU 320 may be used by STAs conforming to one or more standards (e.g., the IEEE 802.11n standard amendment). HT mixed mode PPDU 320 may support MIMO and enhance spectral efficiency. For example, HT mixed mode PPDU 320 may support MIMO to up to 4 spatial streams, which may enhance spectral efficiency four folds. HT mixed mode PPDU 320 may have a minimum preamble duration. The minimum preamble duration may increase, for example, based on the number/quantity of spatial streams carried by the PPDU. For example, HT mixed mode PPDU 320 may have a minimum preamble duration of 35.6 µs (or any other value), which may increase depending on the number/quantity of spatial streams carried by the PPDU.

As shown in FIG. 3, HT mixed mode PPDU 320 may include an L-STF, an L-LTF, an L-SIG, an HT Signal field (HT-SIG), an HT Short Training field (HT-STF), one or more HT Long Training field (HT-LTF), and a Data field. The HT-LTF field and the Data field may comprise one or more symbols each having a duration of 3.6 µs or 4 µs (or any other values). A fixed length of duration may be used for carrying symbol information, for example, under different lengths of durations. The remaining length of duration may be used for carrying a GI. For example, for each symbol having a duration of 3.6 µs or 4 µs as described herein, 3.2 µs may carry symbol information while the remaining 0.4 µs or 0.8 µs may carry a GI. The 0.4 µs long GI may be called short GI while the 0.8 µs long GI may be called regular or normal GI.

For HT mixed mode PPDUs, two bandwidths, 20 MHz and 40 MHz, may be supported. A band may be divided into 64 subcarriers, for example, if/when the PPDU bandwidth is 20MHz. A band may be divided into 128 subcarriers, for example, if/when the PPDU bandwidth is 40 MHz. In both cases, a subcarrier spacing of 312.5 kHz may be maintained.

VHT PPDU 330 may be used by STAs conforming to the IEEE 802.11ac standard amendment. VHT PPDU 330 may support MIMO transmission and enhance spectral efficiency. For example, VHT PPDU 330 may support MIMO transmission to up to 8 spatial streams, which may enhance spectral efficiency eight folds. VHT PPDU 330 may have a minimum preamble duration. The minimum preamble duration may increase, for example, based on the number/quantity of spatial streams carried by VHT PPDU 330. For example, VHT PPDU 330 may have a minimum preamble duration of 39.6 µs, which may increase depending on the number/quantity of spatial streams carried by VHT PPDU 330.

As shown in FIG. 3, VHT PPDU 330 may include an L-STF, an L-LTF, an L-SIG, a VHT Signal A field (VHT-SIG-A), a VHT Short Training field (VHT-STF), one or more VHT Long Training field (VHT-LTF), a VHT Signal B field (VHT-SIG-B), and a Data field. The VHT-LTF field and the Data field of VHT PPDU 330 may comprise one or more symbols each having a duration of 3.6 µs or 4 µs (or any other value). Similar to HT mixed mode PPDU 320, for each symbol having a duration of 3.6 µs or 4 µs as described herein, 3.2 µs may carry symbol information while the remaining 0.4 µs or 0.8 µs may carry a GI. The 0.4 µs long GI may be called short GI while the 0.8µs long GI may be called regular or normal GI.

For VHT PPDUs, four bandwidths, 20 MHz, 40 MHz, 80 MHz, and 160 MHz, may be supported. The band may be divided into 64 subcarriers, for example, if/when the PPDU bandwidth is 20MHz. The band may be divided into 128 subcarriers, for example, if/when the PPDU bandwidth is 40 MHz. The band may be divided into 256 subcarriers, for example, if/when the PPDU bandwidth is 80MHz. The band may be divided into two 256-subcarrier 80MHz bands, for example, if/when the PPDU bandwidth is 160 MHz. In all cases, a subcarrier spacing of 312.5 kHz may be maintained.

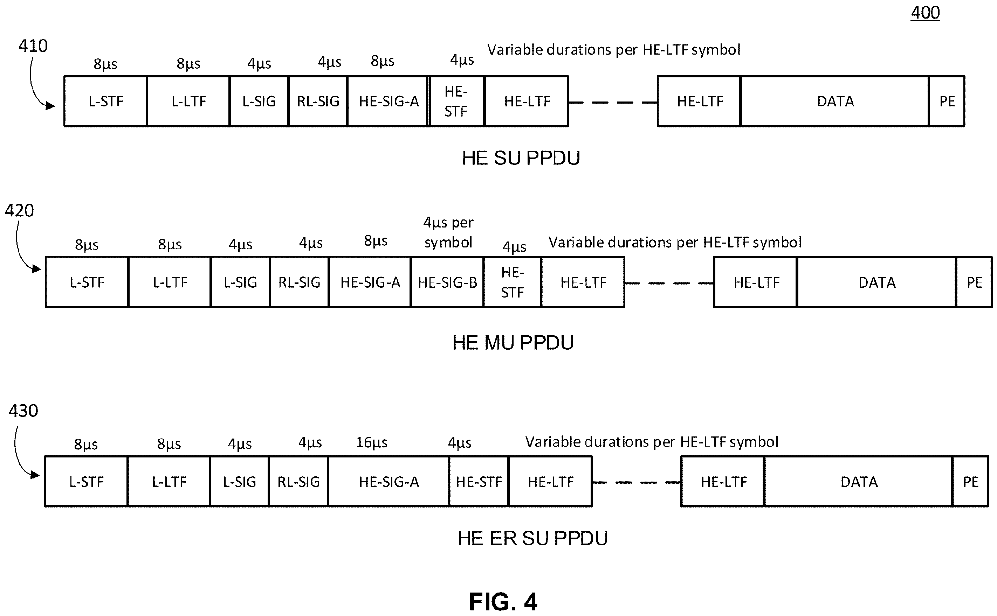

FIG. 4 shows examples of PPDU, such as a High Efficiency (HE) Single User (SU) PPDU 410, an HE Multi-User (MU) PPDU 420, and an HE Extended Range (ER) SU PPDU 430. HE SU PPDU 410, HE MU PPDU 420, and HE ER SU PPDU 430 may be used by STAs conforming to the IEEE 802.11ax standard amendment.

HE SU PPDU 410 may support higher spectral efficiency compared to VHT PPDU 330, for example, due to increased subcarrier spacing and/or higher order modulation support. HE SU PPDU 410 may have a minimum preamble duration of 44 µs (or any other value). As shown in FIG. 4, HE SU PPDU 410 may include an L-STF, an L-LTF, an L-SIG, a Repeated L-SIG field (RL-SIG), an HE Signal A field (HE-SIG-A), an HE Short Training field (HE-STF), one or more HE Long Training fields (HE-LTF), a Data field, and a Packet Extension (PE) field.

Similar to HE SU PPDU 410, HE MU PPDU 420 may support higher spectral efficiency compared to VHT PPDU 330. HE MU PPDU 420 may also support OFDMA. HE MU PPDU 420 may allow for payloads of multiple users to be multiplexed in the frequency domain in the Data field, for example, due to denser subcarrier spacing (as in HE SU PPDU 410). HE MU PPDU 420 may support multiplexing the payload of a plurality of (e.g., up to 9) users in a single band (e.g., 20 MHz band). HE MU PPDU 420 may have a minimum preamble duration of 47.2 µs (or any other value), which may increase depending on the number/quantity of spatial streams carried by HE MU PPDU 420.

As shown in FIG. 4, HE MU PPDU 420 may include an L-STF, an L-LTF, an L-SIG, an RL-SIG, an HE-SIG-A field, an HE Signal B field (HE-SIG-B), an HE-STF field, one or more HE-LTF fields, a Data field, and a PE field. HE MU PPDU 420 may further include HE-SIG-B compared to HE SU PPDU 410. HE-SIG-B may contain indications per STA of RU allocations. A STA may use the indications in HE-SIG-B to locate its payload in HE MU PPDU 420.

For HE SU PPDU 410 and/or HE MU PPDU 420, the GI portion (e.g., duration) of the HE-LTF field and the Data field may be one of 0.8 µs, 1.6 µs, and 3.2 µs. An AP or STA may use a suitable GI duration depending on the channel conditions or capability of the target STA or AP.

For both HE SU PPDU 410 and HE MU PPDU 420, the information portion of the HE-LTF may be one of 3.2 µs, 6.4 µs, or 12.8 µs. A subcarrier spacing of the HE-LTF may depend on the information portion (e.g., duration) of the HE-LTF. For example, a subcarrier spacing of the HE-LTF may be 312.5 kHz, for example, if the information potion is 3.2 µs. A subcarrier spacing of the HE-LTF may be 156.25 kHz, for example, if the information portion is 6.4 µs. A subcarrier spacing of the HE-LTF may be 78.125 kHz, for example, if the information portion is 12.8 µs. Unlike the HE-LTF, the information portion of the Data field for both HE SU PPDU 410 and HE MU PPDU 420 may be a fixed value (e.g., is always 12.8 µs). A subcarrier spacing of the Data field may be a fixed value corresponding to the information portion (e.g., duration thereof). For example, a subcarrier spacing of the Data field is always 78.125 kHz corresponding to the duration of the information portion being 12.8 µs. When/if a/an (e.g., 3.2 µs or 6.4 µs long) HE-LTF is used by a transmitting STA to transmit/send HE SU PPDU 410 or HE MU PPDU 420, a receiving STA may be required to interpolate the channel estimates to a subcarrier spacing (e.g., a resolution of 78.125 kHz) to match the subcarrier spacing of the Data field.

As shown in FIG. 4, HE ER SU PPDU 430 may include an L-STF, an L-LTF, an L-SIG, an RL-SIG, an HE-SIG-A field, an HE-STF field, one or more HE-LTF fields, a Data field, and a PE field. HE ER SU PPDU 430 may have an HE-SIG-A field that is duplicated in the time domain, for example, compared to HE SU PPDU 410. For example, the HE-SIG-A field of the HE ER SU PPDU 430 may be 16 µs long instead of 8 µs long as in HE SU PPDU 410. As such, both L-SIG (duplicated using RL-SIG) and HE-SIG-A may be sent in duplicates, which may allow a receiving STA to combine the two copies to increase the energy of the received signal. This increased energy may result in an extended range of reception and may increase transmission reliability between the transmitting STA and the receiving STA.

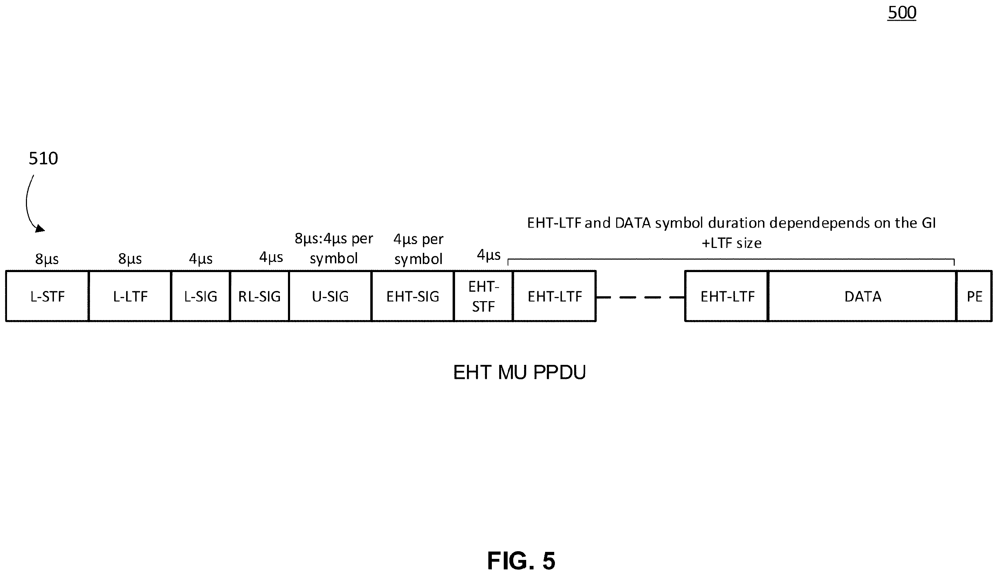

FIG. 5 shows an example of PPDU. More specifically, FIG. 5 shows an Extremely High Throughput (EHT) MU PPDU. EHT MU PPDU 510 may support OFDMA. For example, EHT MU PPDU 510 may support OFDMA up to a bandwidth of 320 MHz. EHT MU PPDU 510 may improve spectral efficiency, for example, due to support of a higher order modulation compared to other PPDUs (e.g., HE SU PPDU 410 and HE MU PPDU 420) while supporting the same number/quantity of spatial streams. EHT MU PPDU 510 may have a minimum preamble duration of 47.2 µs (or any other value), which may increase depending on the number/quantity of spatial streams carried by EHT MU PPDU 510.

As shown in FIG. 5, EHT MU PPDU 510 may include an L-STF, an L-LTF, an L-SIG, an RL-SIG, a Universal Signal field (U-SIG), an EHT Signal field (EHT-SIG), an EHT Short Training field (EHT-STF), one or more EHT Long Training fields (EHT-LTF), a Data field, and a PE field. EHT MU PPDU 510 may be used by a transmitting STA for both SU and MU transmissions, according to one or more standards, such as the IEEE 802.11be standard amendment and/or any earlier or later release and/or version.

The U-SIG may allow (e.g., ensure) forward compatibility of EHT MU PPDU 510. This may mean that any future PPDUs that are backward compatible to a standard such as IEEE 802.11be may contain the same U-SIG field and interpretation. For example, IEEE 802.11be STAs may be able to understand at least in part a PPDU developed in a future amendment.

The EHT-SIG may contain indications per STA of resource unit (RU) allocations. A STA may use the indications in the EHT-SIG to locate payload in EHT MU PPDU 510.

The GI portion of the EHT-LTF and Data fields of EHT MU PPDU 510 may be one of: 0.8 µs, 1.6 µs, or 3.2 µs. An AP or STA may use a suitable GI duration depending on the channel conditions or capability of the target STA or AP.

The information portion of the EHT-LTF may be one of 3.2 µs, 6.4 µs, or 12.8 µs. Depending on the information portion duration, a subcarrier spacing of the EHT-LTF may be one of: 312.5 kHz if the information potion is 3.2 µs, 156.25 kHz if the information portion is 6.4 µs, or 78.125 kHz if the information portion is 12.8 µs. The information portion of the Data field of EHT MU PPDU 510 may be always 12.8 µs. A subcarrier spacing of the Data field may be always 78.125 kHz corresponding to the duration of the information portion being 12.8 µs. When/if a 3.2 µs long or a 6.4 µs long EHT-LTF is used by a transmitting STA to send (e.g., transmit) EHT MU PPDU 510, a receiving STA may be required to interpolate the channel estimates to a subcarrier spacing resolution of 78.125 kHz to match the Data field subcarrier spacing.

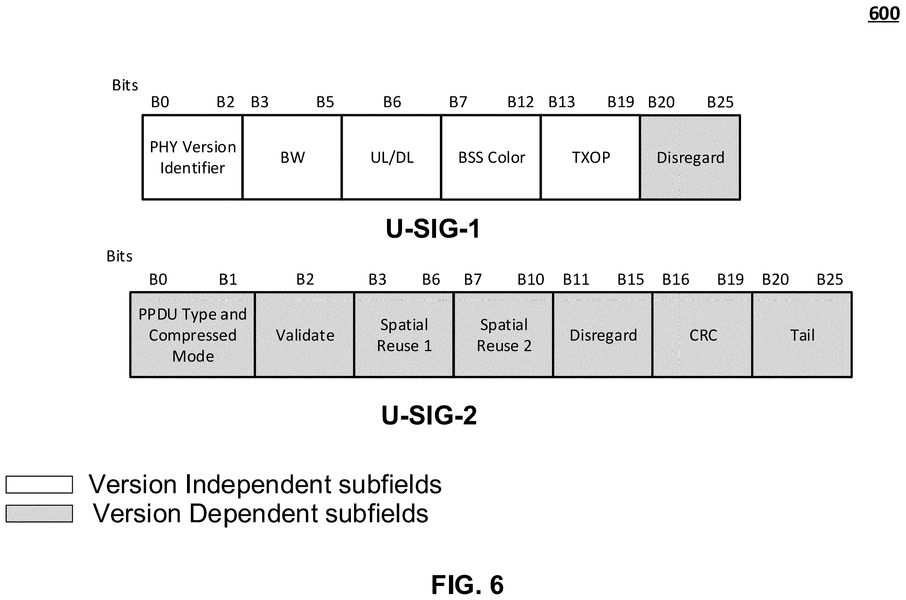

FIG. 6 shows an example universal signal (U-SIG) field. More specifically, FIG. 6 shows an example U-SIG field 600 which may be used in EHT trigger based (TB) PPDUs. The U-SIG field 600 may comprise two symbols (e.g., or any other number of symbols), for example, two symbols U-SIG-1 and U-SIG-2 as shown in FIG. 6. A symbol (e.g., each symbol, U-SIG-1 and/or U-SIG-2) may comprise (e.g., contain) 26 bits (e.g., or any other quantity of bits).

The U-SIG field 600 may enable (e.g., bring) forward compatibility to the EHT preamble. The U-SIG field 600 may be designed to enable (e.g., bring) forward compatibility to the EHT preamble, for example, via use (e.g., introduction) of version independent subfields. The version independent subfields may be located in the U-SIG-1 (e.g., only located in the U-SIG-1), for example, for the EHT PHY. The version independent subfields may be (e.g., comprise) subfields that are consistent in location and interpretation across various IEEE 802.11 PHY layers (e.g., version independent subfields). The version independent subfields may, for example, achieve improved (e.g., better) coexistence among IEEE 802.11 PHYs that are defined for 2.4, 5, and 6 GHz spectrum from the EHT PHY specification onwards.

The U-SIG field 600 may comprise version independent subfields and version dependent subfields, for example, as shown in FIG. 6. The version dependent subfields may follow the version independent subfields. The version independent subfields may be located from bit B0 to bit B19 of the first symbol U-SIG-1, for example, as shown in FIG. 6. The version dependent subfields may be located from bit B20 to bit B25 of the first symbol U-SIG-1 and over all the bits (e.g., from bit B0 to bit B25) of the second symbol U-SIG-2, for example, as shown in FIG. 6.

A PHY Version Identifier subfield may be (e.g., comprise) a subfield (e.g., one) of the version independent subfields in the U-SIG field 600. The PHY Version Identifier subfield may be located from bit B0 to bit B2 of the first symbol U-SIG-1, for example, as shown in FIG. 6. The PHY Version Identifier may, for example, enable (e.g., facilitate) autodetection for IEEE 802.11 PHY layers that are defined for the 2.4, 5, and 6 GHz spectrum from the EHT PHY specification onwards. The value of the PHY Version Identifier subfield may be used to identify the PHY version (e.g., the exact PHY version) of the EHT PPDU.

The version independent subfields may comprise one or more other version independent subfields. The one or more other version independent subfields may comprise a Bandwidth (BW) subfield indicating the PPDU bandwidth (e.g., located from bit B3 to bit B5 of U-SIG-1 in the U-SIG field 600). The one or more other version independent subfields may comprise an Uplink/Downlink (UL/DL) subfield indicating if (e.g., whether) the PPDU is an uplink or a downlink PPDU (e.g., located at bit B6 of U-SIG-1 in the U-SIG field 600). The one or more other version independent subfields may comprise a BSS Color subfield indicating the BSS Color of the PPDU (e.g., located from bit B7 to bit B12 of U-SIG-1 in the U-SIG field 600). The one or more other version independent subfields may comprise a TXOP subfield indicating a duration of a send (e.g., transmit) opportunity (TXOP) in which the PPDU is sent (e.g., transmitted) (e.g., located from bit B13 to bit B19 of U-SIG-1 in the U-SIG field 600).

The version dependent subfields in the U-SIG field 600 may be (e.g., comprise) subfields specific to an IEEE 802.11 PHY. The version dependent subfields may comprise a Disregard subfield, for example, in the U-SIG-1 (e.g., as shown from bit B20 to bit B25 of U-SIG-1 in FIG.6) and in the U-SIG-2 (e.g., as shown from bit B11 to bit B15 of U-SIG-2 in FIG. 6). The second symbol U-SIG-2 may comprise one or more other version dependent subfields, for example, a PPDU Type and Compressed Mode subfield (e.g., as shown from bit B0 to bit B1 of U-SIG-2 in FIG. 6), a Validate subfield (e.g., as shown at bit B2 of U-SIG-2 in FIG. 6), a Spatial Reuse 1 subfield (e.g., as shown from bit B3 to bit B6 of U-SIG-2 in FIG. 6), a Spatial Reuse 2 subfield (e.g., as shown from bit B7 to bit B10 of U-SIG-2 in FIG. 6), a Disregard subfield (e.g., as shown from bit B11 to bit B15 of U-SIG-2 in FIG. 6), a CRC subfield (e.g., as shown from bit B16 to bit B19 of U-SIG-2 in FIG. 6), and/or a Tail subfield (e.g., as shown from bit B20 to bit B25 of U-SIG-2 in FIG. 6).

Disregard subfields (e.g., the disregard subfield shown at bits B20 to B25 of U-SIG-1 and the disregard subfield shown at bits B11 to B15 of U-SIG-2 in the U-SIG field 600) may be used by a PHY version (e.g., a future PHY version). The disregard subfields may be intended for use by a future PHY Version, for example, that may not be supported by a receiving STA. A receiving STA may ignore (e.g., skip, disregard, etc.) the disregard subfields, for example, without impacting continued reception, by the receiving STA, of the PPDU. The reception at the STA may continue (e.g., continue as usual), for example, after or in response to skipping the disregard fields.

The PPDU Type and Compressed Mode subfield (e.g., bits B0 to B1 of U-SIG-2 shown in FIG. 6) may indicate a type of PPDU. The PPDU Type and Compressed Mode subfield may indicate the type of PPDU, for example, among a number of (e.g., quantity of) PPDU types (e.g., EHT MU PPDU or EHT TB PPDU) supported by a (e.g., particular) PHY version.

The Validate subfield (e.g., bit B2 of U-SIG-2 shown in FIG. 6) may indicate whether to continue or terminate the reception of a PPDU at a STA. A STA may terminate the reception of a PPDU, for example, if the STA encounters a PPDU where at least one field in the preamble that is identified as Validate for the STA is not set to the value specified for the field in that PHY version. The STA may wait, for example, until the PPDU's estimated duration expires. The STA may report information from the version independent subfields to the MAC layer, for example, based on the expiration of the PPDU's estimated duration. The STA may terminate the reception of the PPDU, for example, if at least one field in the preamble equals a value that is identified as Validate for the STA.

The Spatial Reuse 1 subfield (e.g., bits B3 to B6 of U-SIG-2 shown in FIG. 6) and the Spatial Reuse 2 subfield (e.g., bits B7 to B10 of U-SIG-2 shown in FIG. 6) may comprise (e.g., contain) parameters to support spatial reuse features defined in a PHY version (e.g., a specific PHY version). The Spatial Reuse subfields 1 and 2 may be version dependent subfields. The Spatial Reuse subfields 1 and 2 may be understood (e.g., only understood) by STAs supporting a specific PHY version (i.e., only STAs supporting a specific PHY version may be able to understand the bits comprised by the Spatial Reuse subfields 1 and 2).

The CRC subfield (e.g., bits B16 to B19 of U-SIG-2 shown in FIG. 6) may comprise (e.g., contain) a frame check sum. The CRC subfield may comprise a frame check sum, for example, to validate the correctness of U-SIG field contents.

The Tail subfield (e.g., bits B20 to B25 of U-SIG-2 shown in FIG. 6) may be set to 0. The Tail subfield may be used to terminate the trellis of a convolutional encoder used to encode U-SIG fields, for example, based on the Tail subfield being set to 0.

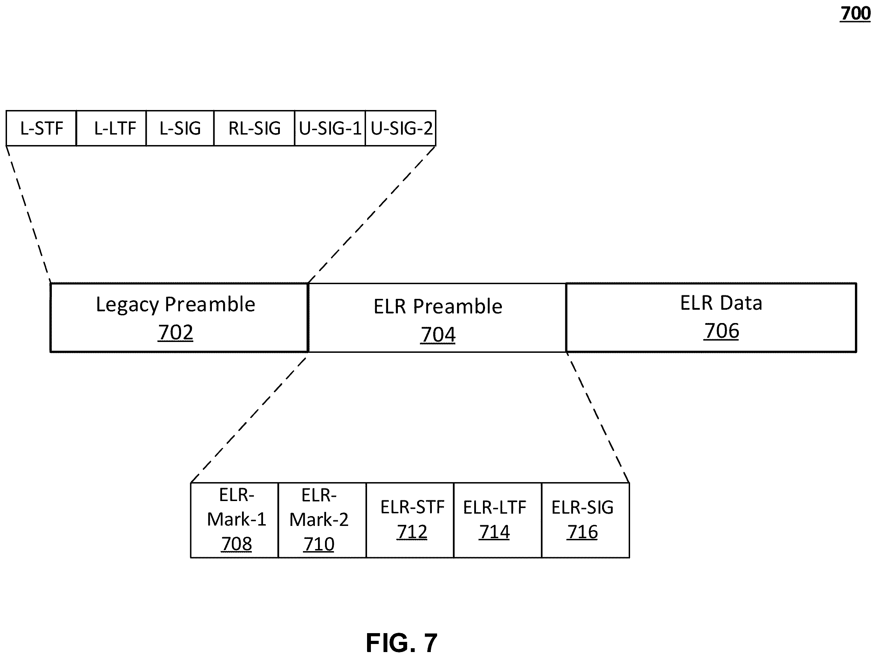

FIG. 7 shows an example extended/enhanced long range (ELR) PPDU. More specifically, FIG. 7 shows an example ELR PPDU 700 which may allow a STA to increase its transmission range. For example, a common problem in at least some Wi-Fi communications may be an asymmetry between a downlink transmission range of an AP and an uplink transmission range of a STA associated with the AP. The asymmetry (e.g., downlink/uplink transmission range asymmetry) may result in the STA (e.g., successfully) receiving PPDUs from the AP and being unable to communicate with the AP, for example, if the STA is an edge STA (i.e., located at the edge of the AP's transmission range). The ELR PPDU 700 may reduce the downlink/uplink transmission range asymmetry, for example, by enabling the STA to increase its uplink transmission range to successfully reach the AP. The ELR PPDU 700 may use repetitions (e.g., in frequency and/or time), for example, to encode a data payload and reach a higher transmission range. The ELR PPDU 700 transmission may be restricted within a 20 MHz bandwidth (e.g., or any other bandwidth).

The ELR PPDU 700 may comprise a legacy preamble 702, an ELR preamble 704, and/or an ELR data portion 706, for example, as shown in FIG. 7. The legacy preamble 702 may enable backward compatibility of the ELR PPDU 700. The legacy preamble 702 may allow legacy IEEE 802.11 devices to detect that the ELR PPDU 700 is being sent (e.g., transmitted). The legacy IEEE 802.11 devices may defer their own transmission, for example, until an estimated duration of the transmission of the ELR PPDU 700. The legacy preamble 702 may comprise various formats. The legacy preamble 702 may comprise an L-STF, an L-LTF, and/or an L-SIG. The legacy preamble 702 may comprise (e.g., further comprise) an RL-SIG, for example, after the L-SIG. The L-STF, L-LTF, and/or L-SIG may be described herein for FIG. 3. The RL-SIG may be described herein for FIG. 4. The presence of the RL-SIG in the legacy preamble 702 may increase the range of the ELR PPDU 700, for example, if received by a legacy IEEE 802.11 STA.

The legacy preamble 702 may further comprise one or more U-SIG fields. The legacy preamble 702 may further comprise one or more U-SIG fields (e.g., U-SIG-1 and U-SIG-2 shown in FIG. 7), for example, after the L-SIG and the RL-SIG. The one or more U-SIG fields may provide U-SIG information that is used by a STA receiving the ELR PPDU 700. The U-SIG may comprise one or more U-SIG symbols. The U-SIG may comprise two U-SIG symbols, for example, the U-SIG-1 and the U-SIG-2 as described herein for FIG. 6. The U-SIG may comprise any number of U-SIG symbols, for example, four U-SIG symbols. The one or more U-SIG fields may indicate a TXOP duration associated with an ELR PPDU, a BSS Color associated with the STA sending (e.g., transmitting) an ELR PPDU, a bandwidth associated with an ELR PPDU, an UL/DL indication, a PHY version of an ELR PPDU, and/or any other suitable information.

The ELR preamble 704 may comprise an ELR-STF 712, an ELR-LTF 714, and/or an ELR-SIG 716, for example, as shown in FIG. 7. The ELR-STF 712 may be used by a receiver (e.g., an AP) of the ELR PPDU 700 to synchronize with the carrier frequency and frame timing of the sender (e.g., transmitter) of the ELR PPDU 700 (e.g., an edge STA) and/or to adjust the receiver signal gain. The ELR-STF 712 may be used by the receiver (e.g., an AP) of the ELR PPDU 700, for example, similar to the use of a L-STF. The ELR-LTF 714 may be used by the receiver (e.g., an AP) of the ELR PPDU 700 to estimate channel coefficients, for example, for equalizing the channel response (e.g., amplitude and phase distortion) in both the ELR-SIG 716 and the ELR data portion 706 of the ELR PPDU 700.

The ELR-STF 712 and the ELR-LTF 714 may be a longer version of a L-STF and a L-LTF, respectively. The ELR-STF 712 may be a longer version of the L-STF, for example, to support longer range synchronization compared to the L-STF. The ELR-LTF 714 may be a longer version of the L-LTF, for example, to support higher robustness if estimating the channel coefficients from the edge STA to the AP. The ELR-LTF 714 may comprise a higher number of (e.g., quantity of) symbol repetitions, for example, compared to the L-STF (e.g., 2 repetitions, or any other quantity of repetitions). The ELR preamble 704 may be designed with a higher degree of flexibility and without being constrained by a (e.g., any) requirement of backward compatibility, for example, based on (e.g., due to) the legacy preamble 702.

One or more of the L-LTF, the L-SIG, the RL-SIG, and/or the U-SIG (e.g., the U-SIG-1 and/or the U-SIG-2 shown in FIG. 7) of the legacy preamble 702 may provide the ELR-LTF 714. The ELR-SIG 716 may comprise indications per STA of resource unit (RU) allocations. A STA may use the indications in the ELR-SIG 716, for example, to locate its payload in the ELR PPDU 700.

The L-SIG, the RL-SIG, the U-SIG-1, and/or the U-SIG-2 fields (e.g., in the legacy preamble 702 shown in FIG. 7) may follow (e.g., be configured for, comprise, etc.) the standard UHR format. The U-SIG contents (e.g., the U-SIG-1 and/or the U-SIG-2 fields shown in FIG. 7) may not follow the standard UHR format, for example, the U-SIG contents may be (e.g., uniquely) configured to signal ELR (e.g., using one or more fields). Two ELR-Mark symbols may be sent (e.g., transmitted) (e.g., ELR-Mark-1 708 and ELR Mark-2 710 in the ELR preamble 704 shown in FIG. 7), for example, after or in response to (e.g., following) the U-SIG (e.g., the U-SIG-1 and the U-SIG-2 in the legacy preamble 702 shown in FIG. 7). The ELR-Mark-1 708 and the ELR Mark-2 710 fields may be comprised in the ELR preamble 704.

The ELR-Mark-1 708 and the ELR Mark-2 710 symbols may carry a 96 element sequence (e.g., 48 elements per Mark symbol). The 96 element sequence (e.g., the 48 elements per Mark symbol) may be unique for the BSS color of the BSS in which the sending (e.g., transmitting) STA is a member. The BSS color may be one of 64 possible BSS colors (e.g., or any other number of possible BSS colors). Each of the 64 possible BSS colors may be orthogonal with each other. The 96 element sequence of the ELR-Mark-1 708 and the ELR Mark-2 710 may be used to indicate the appropriate BSS color for the sending (e.g., transmitting) STA. A receiving STA (e.g., a STA receiving the ELR PPDU 700) may cross-correlate its own sequence (i.e., the sequence that matches its BSS color) to the received ELR-Mark symbols portion of the ELR PPDU 700. The receiving STA may determine that the ELR PPDU 700 is coming from within the BSS, for example, if the correlation exceeds a threshold. The STA may determine that the ELR PPDU 700 is not coming from within the PPDU (e.g., the ELR PPDU 700 is an inter-BSS PPDU), for example, if the cross correlation is less than a threshold. The receiving STA may discard the ELR PPDU 700, for example, if the cross correlation is less than a threshold. An ELR PPDU (e.g., the ELR PPDU 700 shown in FIG. 7) may comprise any suitable fields and any suitable information. A non-ELR UHR PPDU may comprise a same format as the ELR PPDU 700, for example, excluding the ELR-Mark-1 708 and the ELR Mark-2 710.

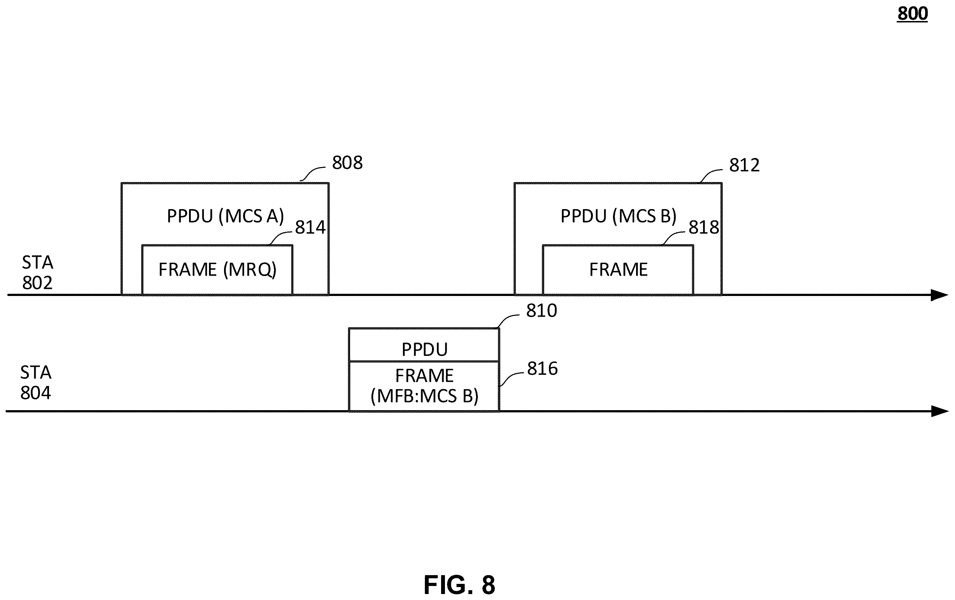

FIG. 8 shows an example of a link adaptation operation. More specifically, FIG. 8 shows an example 800 in which a STA 802 may send (e.g., transmit) a PPDU 808 to a STA 804 using a modulation and coding scheme (MCS) value of MCS A. The STA 802 may determine the value of MCS A, for example, using a vendor specific algorithm (i.e., out of scope of the IEEE 802.11 standard). The STA 802 may choose (e.g., select, determine) the value of MCS A to be at or near the highest supported MCS of the STA 802 (i.e., supported MCS for transmission) and the STA 804 (i.e., supported MCS for reception), for example, if the STA 802 has consistently received, from the STA 804, positive acknowledgements of sent (e.g., transmitted) frames to the STA 804. The STA 804 may choose the value of MCS A to be at or near the lowest supported MCS of the STA 802 (i.e., supported MCS for transmission) and the STA 804 (i.e., supported MCS for reception), for example, if the STA 802 has needed to resend (e.g., retransmit) frames to the STA 804 multiple times before receiving an acknowledgement.

The PPDU 808 may comprise/carry a frame 814, for example, as shown in FIG. 8. The frame 814 may comprise a link adaptation control field. The link adaptation control field may comprise an MCS request (MRQ) subfield. The STA 802 may set a value of the MRQ subfield to 1, for example, to solicit an MCS feedback from the STA 804. The frame 814 may be a QoS Data frame or a QoS Null frame. The QoS Data frame and the QoS Null frame may comprise/contain an aggregated control (A-control) subfield for carrying a link adaptation control subfield.

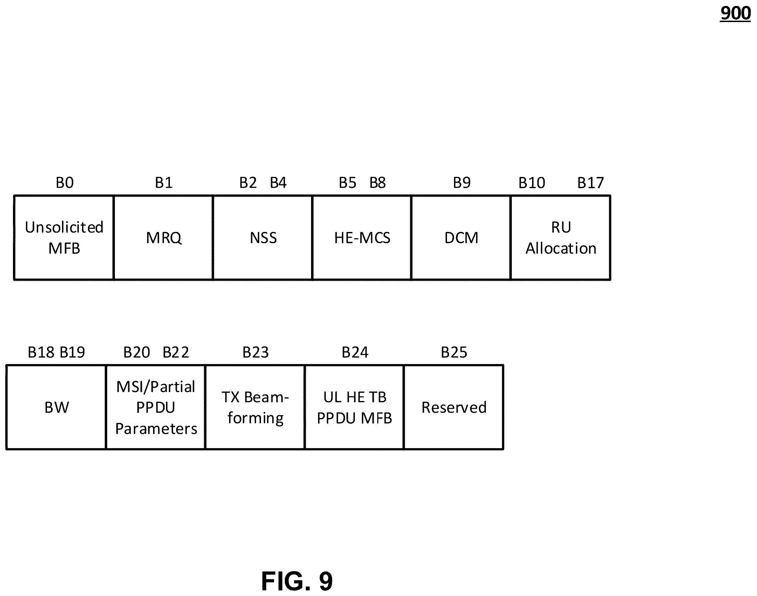

FIG. 9 shows an example high efficiency (HE) link adaptation control subfield. The link adaptation control field (e.g., subfield) of the frame 814 shown in FIG. 8 may comprise a format, for example, the format of the HE link adaptation (HLA) control subfield 900 shown in FIG. 9. The HLA control subfield 900 may comprise an Unsolicited MCS Feedback (MFB) subfield, an MRQ subfield, a number of spatial streams (NSS) subfield, an HE-MCS subfield, a dual carrier modulation (DCM) subfield, a resource unit (RU) Allocation subfield, a bandwidth (BW) subfield, an MRQ sequence identifier (MSI)/Partial PPDU Parameters subfield, a send (e.g., transmit (TX)) Beamforming subfield, an uplink (UL) HE trigger based (TB) PPDU MFB subfield, and/or a Reserved subfield, for example, as shown in FIG. 9.

A STA may solicit an MCS feedback (MFB). A STA that solicits an MFB may be referred to as an MFB requester. An MFB requester may set the MRQ subfield to 1 and the Unsolicited MFB subfield to 0 in an HLA Control subfield of a frame (e.g., the HLA control subfield 900 shown in FIG. 9), for example, to request another STA (i.e., an MFB responder) to provide link adaptation feedback. The MFB requester may set the MSI field to a value ranging from 0 to 6 (e.g., or any other range), for example, in a request (e.g., each request). The MFB requester choosing (e.g., setting) the MSI value may be implementation dependent (i.e., how the MFB requester chooses/sets the MSI value may be dependent on an implementation).

The MFB requester may specify the RU index and the BW requesting the link adaptation feedback. The MFB responder may compute (e.g., estimate) the HE-MCS, the NSS, and/or the DCM of the RU and BW specified in the MRQ, for example, based on receiving (e.g., on receipt of) an HLA Control subfield (e.g., the HLA control subfield 900 shown in FIG. 9) with the MRQ subfield equal to 1. The MFB responder may compute (e.g., estimate) the HE-MCS, the NSS, and/or the DCM of the RU and BW specified in the MRQ, for example, based on the (e.g., same) RU of the PPDU carrying the MRQ. The PPDU carrying the MRQ may include/comprise the RU requested for the MFB (i.e., the RU requested for the MFB may be comprised in the PPPDU carrying the MRQ). The MFB responder may label the result of the computation with the MSI value from the HLA Control subfield in the received frame carrying the MRQ. The MFB responder may include the received MSI value in the MSI field of the corresponding response frame (i.e., the received MSI value may be comprised in the MSI field of the corresponding response frame). The MFB requester may associate the MFB with the soliciting MRQ, for example, for a delayed response.

An MFB responder may send a solicited MFB. An MFB responder that sends a solicited MFB may set the Unsolicited MFB subfield to 0 and the MRQ subfield to 0 in the HLA Control subfield. The STA receiving the MFB may use the received MFB, for example, to compute the appropriate HE-MCS, DCM, and/or NSS. A STA may send an unsolicited MFB using the HLA Control subfield. A STA sending an unsolicited MFB using the HLA Control subfield may set the Unsolicited MFB subfield to 1. Unsolicited HE-MCS, NSS, DCM, BW, and/or RU estimates reported in an HLA Control subfield sent by a STA may be computed, for example, based on the (most recent) PPDU received by the STA that matches the description indicated by the PPDU format, Tx Beamforming, and/or Coding Type subfields in the (same) HLA Control subfield.

The STA 804 may receive the frame 814, for example as shown in the example 800 in FIG. 8. The STA 802 may set the MRQ subfield of the frame 814 to 1, for example, to solicit a recommended MCS value from the STA 804. The MCS value of MCS A may be set to a conservative value (e.g., an MCS value that is equal to or less than a previously successful MCS value), for example, to ensure that the STA 804 receives the request reliably. The STA 804 may determine the recommended HE-MCS, NSS, and DCM of the RU and the BW specified in the PPDU 808, for example, based on (e.g., in response to, upon) reception of the frame 814.

The STA 804 may send (e.g., transmit) a PPDU 810 to the STA 802 (e.g., as shown in FIG. 8). The STA 804 may send (e.g., transmit) a PPDU 810 to the STA 802, for example, after or in response to the reception of the frame 814. The PPDU 810 may carry a frame 816. The frame 816 may indicate an MCS value of MCS B, for example, as shown in the example 800 in FIG. 8. The frame 816 may (e.g., may also) indicate a recommended value of NSS and DCM (e.g., not shown in FIG. 8). The MCS value of MCS B may have a higher value compared to the value of MCS A, for example, if the STA 804 determines that the value of MCS A is too conservative for the current channel conditions between the STA 802 and the STA 804. The MCS value of MCS B may have a smaller value compared to the value of MCS A, for example, if the STA 804 determines that the value of MCS A is too aggressive for the current channel conditions between the STA 802 and the STA 804. The STA 804 may determine the value of MCS B, for example, based on a vendor specific method and may be outside the scope of the IEEE 802.11 standard. The STA 804 may use the receive signal strength indicator (RSSI) or received channel power indicator (RCPI) to estimate the value of MCS B, for example, if/during the reception of the PPDU 808. The STA 804 may use the signal to noise ratio (SNR) or signal to noise plus interference ratio (SNIR) to estimate the value of MCS B, for example, if/during the reception of the PPDU 808. The STA 804 may use the error vector magnitude (EVM) to estimate the value of MCS B, for example, if/during the reception of the PPDU 808. The STA 802 may use (e.g., continue using) the MCS value of MCS B, for example, based on the frame 816 indicating the MCS value of MCS B. The STA 802 may send (e.g., transmit) a PPDU 812 to the STA 804 (e.g., as shown in FIG. 8), for example, using the MCS value of MCS B. The PPDU 812 may carry a frame 818, for example, as shown in the example 800 in FIG. 8.

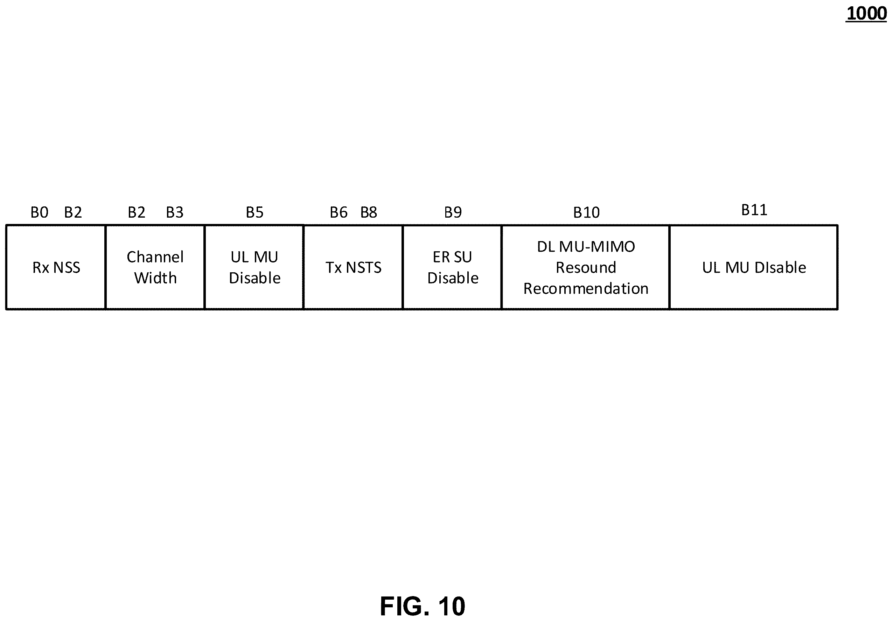

FIG. 10 shows an example operating mode (OM) control subfield. A STA may send (e.g., transmit) a frame carrying an OM control subfield (e.g., OM control subfield 1000 shown in FIG. 10) in the A-control subfield, for example, to control aspects of its communication with another STA. The OM control subfield 1000 may comprise a receive (RX) NSS subfield, a Channel Width subfield, a UL MU disable subfield, a TX number of (e.g., quantity of) space time streams (NSTS) subfield, an extended range SU disable subfield, a downlink (DL) multi-user (MU) MIMO Resound Recommendation subfield, and/or an UL MU Data disable subfield, for example, as shown in FIG. 10.

The OM control subfield 1000 may comprise a plurality of subfields. The RX NSS subfield may indicate the maximum number of (e.g., quantity of) spatial streams (NSS) that the STA supports in reception. The Channel Width subfield may indicate the operating channel width supported by the STA sending (e.g., transmitting) the OM control subfield for both reception and transmission. The Channel Width subfield may, for example, be set to 0 for 20 MHz, 1 for primary 40 MHz, 2 for primary 80 MHz, and 3 for 160 MHz and 80+80 MHz. The UL MU Disable subfield and the UL MU Data Disable subfield may determine the allowed UL MU operations and frame types that can be sent (e.g., transmitted) as a response to a triggering frame. A STA may set the TX NSTS subfield to NSTS - 1, where NSTS is the maximum number of (e.g., quantity of) space-time streams that the non-AP STA supports in transmission. A non-AP STA may set the ER SU Disable subfield to 1, for example, to indicate that HE ER SU PPDU reception is disabled. A non-AP STA may set the ER SU Disable subfield to 0, for example, to indicate that HE ER SU PPDU reception is enabled. An AP may be disallowed to set the ER SU Disable subfield to 1, for example, if the AP is an HE AP. A non-AP STA may set the DL MU-MIMO Resound Recommendation subfield to 1, for example, to indicate that the STA suggests that the AP either resound the channel or increase the channel sounding frequency with the STA. The DL MU-MIMO Resound Recommendation subfield may be set to 0, for example, to indicate that the non-AP STA has no recommendation on the AP channel sounding frequency.

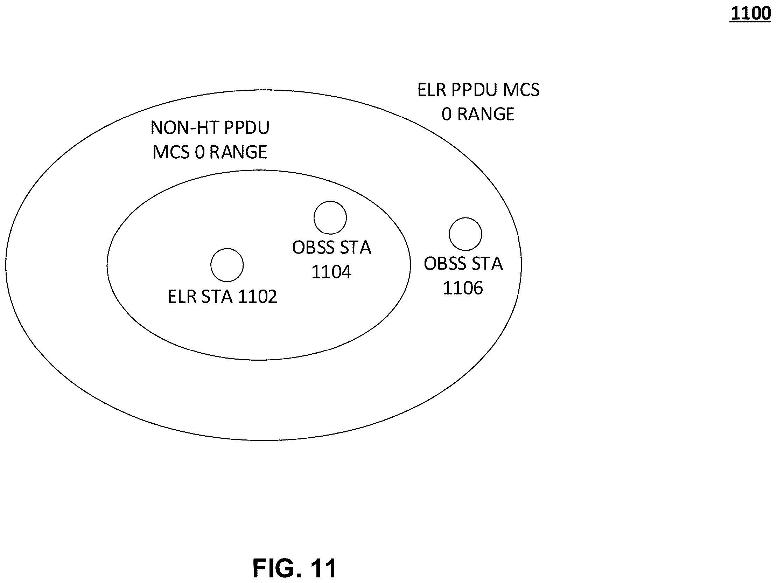

FIG. 11 shows an example channel blocking effect of ELR transmissions. More specifically, FIG. 11 shows an example 1100 of a channel blocking effect of ELR transmissions to overlapping BSS (OBSS) STAs. The example 1100 (e.g., shown in FIG. 11) may comprise a STA 1102, a STA 1104, and a STA 1106. The STA 1104 and/or the STA 1106 may be OBSS STAs relative to the STA 1102. The STA 1104 and/or the STA 1106 may belong to a different BSS than the STA 1102. The STA 1104 and/or the STA 1106 may be referred to as OBSS STAs (e.g., as shown in the example 1100 in FIG. 11). The STA 1102 may support ELR transmission. The STA 1102 may be referred to as an ELR STA (e.g., as shown in the example 1100 in FIG. 11). The ELR STA 1102 may be a non-AP STA, for example, that is associated with an ELR supporting AP (e.g., not shown in FIG. 11). The ELR supporting AP may send (e.g., transmit) and/or receive ELR transmissions. The OBSS STA 1104 and/or the OBSS STA 1106 may support the reception of ELR PPDUs. The OBSS STA 1104 and the OBSS STA 1106 may detect (e.g., hear) an ELR PPDU, for example, if the ELR STA 1102 sends (e.g., transmits) the ELR PPDU. The ELR PPDU may be blocked from accessing the channel, for example, based on the OBSS STA 1104 and the OBSS STA 1106 detecting (e.g., hearing) the ELR PPDU. The OBSS STA 1104 and/or the OBSS STA 1106 may detect the ELR PPDU from the ELR STA 1102, for example, using physical carrier sense. The OBSS STA 1104 and the OBSS STA 1106 may not access the channel for a TXOP duration (e.g., regardless of physical carrier sense), for example, if the ELR STA 1102 sends (e.g., transmits) in the ELR PPDU a frame (e.g. a QoS data frame, an RTS frame, or an Initial Control frame) used for setting a network allocation vector (NAV) of the OBSS STA 1104 and the OBSS STA 1106 for the TXOP duration.

The ELR STA 1102 may control a range of channel blocking, as shown in FIG. 11. The ELR STA 1102 may control the range of channel blocking, for example, that results from its transmission of a PPDU based on the PPDU format and MCS that the ELR STA 1102 uses for the PPDU. The ELR STA 1102 may block the OBSS STA 1104 from accessing the channel, for example, using a non-HT PPDU and a lowest MCS (e.g., MCS 0). The ELR STA 1102 may not block the OBSS STA 1106 from accessing the channel, for example, using the non-HT PPDU and the lowest MCS (e.g., MCS 0). The ELR STA 1102 may block (e.g., both) the OBSS STA 1102 and the OBSS STA 1104, for example, based on (e.g., by) using an ELR PPDU and the lowest MCS (e.g., MCS 0). The ELR STA 1102 may use a non-ELR PPDU (e.g. non-HT PPDU, UHR PPDU, EHT MU PPDU, HE SU PPDU, VHT PPDU or HT PPDU), for example, to prevent excessive channel blocking of OBSS STAs (e.g., the OBSS STA 1104 and/or the OBSS STA 1106). The ELR STA 1102 may use a non-ELR PPDU (e.g. non-HT PPDU, UHR PPDU, EHT MU PPDU, HE SU PPDU, VHT PPDU or HT PPDU), for example, if/when (e.g., in cases where) the ELR STA 1102 does not need to use an ELR PPDU (e.g. the channel conditions with its associated AP are good and/or stable).

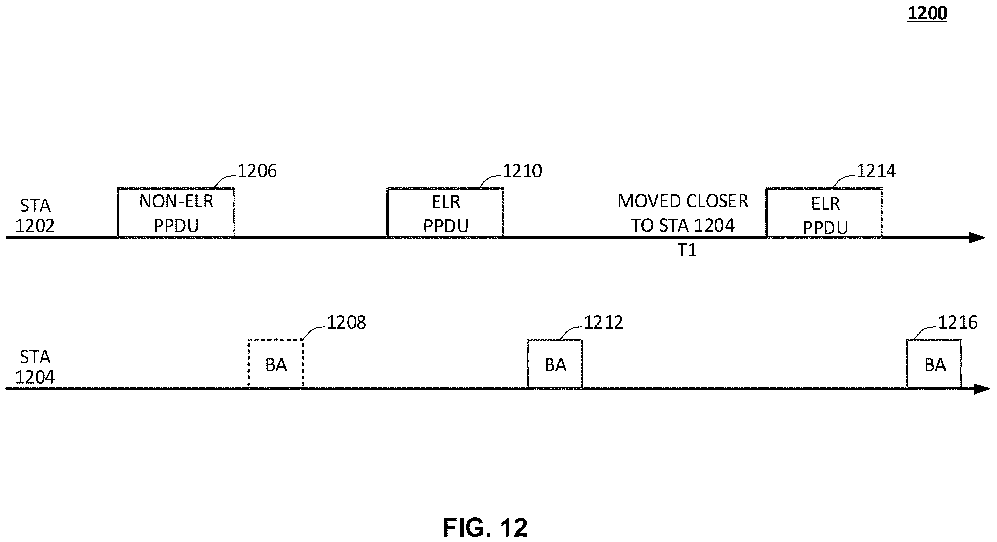

FIG. 12 shows an example application of ELR transmissions. More specifically, FIG. 12 shows an example 1200 of a potential problem that may arise using ELR transmissions. The example 1200 may comprise a STA 1202 and a STA 1204, for example, as shown in FIG. 12. The STA 1202 and the STA 1204 may be members of a same BSS. The STA 1202 may be a non-AP STA and the STA 1204 may be an AP STA. The STA 1202 may be associated with the STA 1204. The STA 1204 may be associated with the STA 1202. The STA 1202 may send (e.g., transmit) a non-ELR PPDU 1206 to the STA 1204, for example, as shown in FIG. 12. The non-ELR PPDU 1206 may use a non-ELR PPDU format (e.g., non-HT PPDU, HT PPDU, VHT PPDU, HE SU PPDU, HE MU PPDU, HE ER SU PPDU, or EHT MU PPDU), for example, as shown in FIGS. 3-5. The STA 1202 may not receive an expected Block Acknowledgement (BA) frame 1208 from the STA 1204 (e.g., due to an insufficient link budget between the STA 1202 and the STA 1204), for example, after or in response to sending (e.g., transmitting) the non-ELR PPDU 1206. The STA 1202 may resend (e.g., retransmit) one or more frames carried in the non-ELR PPDU 1206 using an ELR PPDU 1210, for example, based on not receiving the BA frame 1208. The STA 1204 may (e.g., successfully) receive the ELR PPDU 1210 and may send (e.g., transmit) a BA frame 1212 to the STA 1204, for example, based on (e.g., in response to) the ELR PPDU 1210.

The STA 1202 may (e.g., continue to) use an ELR PPDU format for transmissions to the STA 1204. The STA 1202 may use (e.g., continue using) an ELR PPDU format for transmissions to the STA 1204, for example, after or in response to receiving the BA frame 1212. The STA 1202 may move closer to the STA 1204 resulting in an increase of the link budget between the STA 1202 and the STA 1204, for example, at a time T1 shown in FIG. 12. The increase of the link budget may be enough (e.g., sufficient) for the STA 1202 to use (e.g., begin using) a non-ELR PPDU format for successful transmissions to the STA 1204. The STA 1202 may not have information to detect if a non-ELR PPDU is sufficient for successfully communicating with the STA 1204. The STA 1202 may use (e.g., continue using) an ELR PPDU format and may send (e.g., transmit) an ELR PPDU 1214 to the STA 1204, for example, as shown in FIG. 12. The STA 1202 may use (e.g., continue using) an ELR PPDU format, for example, based on the STA 1202 not having information to detect if a non-ELR PPDU is sufficient for successfully communicating with the STA 1204. The STA 1202 may receive a BA frame 1216, for example, based on (e.g., in response to) the ELR PPDU 1214. The ELR PPDU 1214 may unnecessarily block a wider range of OBSS STAs from accessing the channel and may limit spatial reuse by the OBSS STAs, for example, reducing the throughput and performance of OBSSs adjacent to the STA 1202.

Examples described herein may address the problem associated with at least some wireless communications (e.g., at least some wireless communications using ELR transmissions). The examples described herein may provide improvements for network performance (e.g., OBSS networks), for example, based on increasing access to OBSS STAs (e.g., a wider range of OBSS STAs) and/or increasing spatial reuse by the OBSS STAs. As described herein, a first STA may receive, from a second STA, a first PPDU with an ELR format. The first STA may send (e.g., transmit), to the second STA, a first frame indicating disablement by the second STA of transmission using an ELR format, for example, based on a signal measurement of the first PPDU being greater than a threshold. The sending (e.g., transmitting) the first frame indicating disablement by the second STA of transmission using an ELR format may improve overall network performance, for example, if one or more STAs use an ELR PPDU for transmission. The overall network performance may be improved, for example, by preventing unnecessary use of ELR PPDUs that results in reduced spatial reuse from OBSS networks.

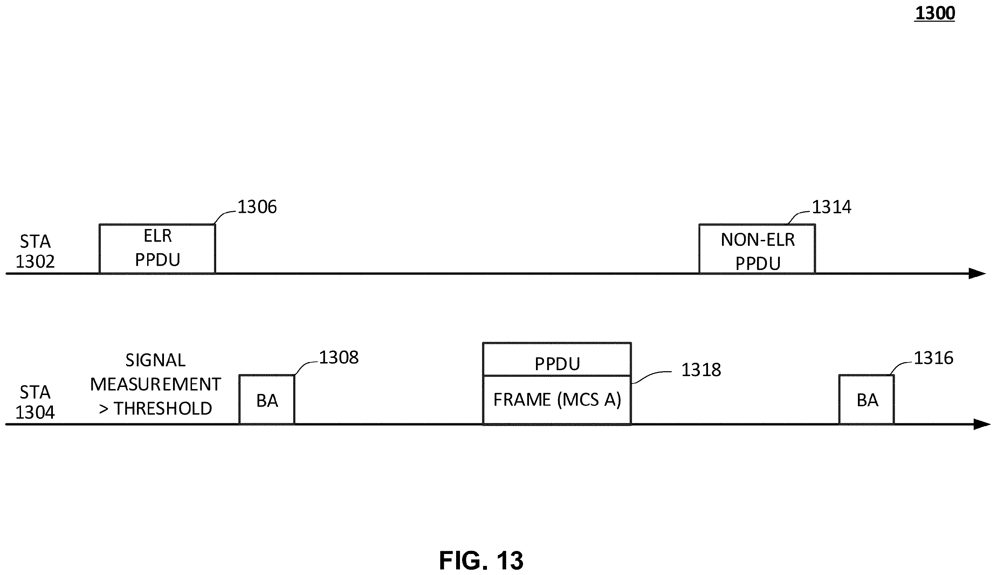

FIG. 13 shows an example of a PPDU format adaptation operation. More specifically, FIG. 13 shows an example 1300 of a link adaptation operation indicating disablement of ELR PPDU transmission. The example 1300 may comprise a STA 1302 and a STA 1304, for example, as shown in FIG. 13. The STA 1302 and the STA 1304 may be members of a same BSS. The STA 1302 may be a non-AP STA. The STA 1304 may be an AP STA. The STA 1302 may be associated with the STA 1304, or vice versa.

The STA 1302 may send (e.g., transmit) an ELR PPDU 1306 to the STA 1304, for example, as shown in the example 1300 in FIG. 13. The ELR PPDU 1306 may comprise a format (e.g., the format shown in FIG. 7). An ELR PPDU may allow a STA to increase its transmission range and/or reduce asymmetry between a downlink transmission range of an AP and an uplink transmission range of a STA associated with the AP, for example, as described for FIG. 7. The STA 1302 may be a non-AP STA that uses an ELR PPDU format for all transmissions to the STA 1304 (e.g., as an AP), for example, due to the asymmetry between the downlink and uplink transmission ranges if a non-ELR PPDU format is used. The STA 1304 may receive the ELR PPDU 1306. The STA 1304 may respond with a BA frame 1308 (e.g., shown in FIG. 13), for example, based on (e.g., in response to) receiving the ELR PPDU 1306.

The STA 1304 may be configured to perform a signal measurement of the ELR PPDU 1306. The STA 1304 may perform a signal measurement of the ELR PPDU 1306. The STA 1304 may determine the signal measurement of the ELR PPDU 1306 to be greater than a threshold, for example, as shown in the example 1300 in FIG. 13. The signal measurement may comprise one or more of: a receive signal strength indicator (RSSI), a signal to noise ratio (SNR), a signal to interference plus noise ratio (SINR), a received channel power indicator (RCPI), and/or an error vector magnitude (EVM). The signal measurement exceeding (e.g., being greater than) the threshold may indicate that a non-ELR PPDU sent (e.g., transmitted) by the STA 1302 may be successfully received by the STA 1304. The STA 1302 may send (e.g., transmit, also send, and/or also transmit) an EHT MU PPDU using an MCS associated with the EHT MU PPDU, for example, if an RSSI measurement by the STA 1304 based on the ELR PPDU 1306 indicates that the signal power of the ELR PPDU 1306 exceeds a minimum sensitivity required (e.g., the threshold) for the STA 1304 to receive the EHT MU PPDU using the MCS associated with the EHT MU PPDU (e.g., EHT-MCS0).

The STA 1304 may send (e.g., transmit), to the STA 1302, a frame 1318. The STA 1304 may send (e.g., transmit), to the STA 1302, the frame 1318, for example, based on the signal measurement by the STA 1304 of the ELR PPDU 1306. The frame 1318 may indicate that an MCS value of MCS A (e.g., associated with a non-ELR PPDU) may (e.g., shall) be used by the STA 1302 for sending (e.g., transmitting) future PPDUs to the STA 1304. The frame 1318 may indicate a recommendation/suggestion for the STA 1302 to use the value of MCS A (e.g., associated with a non-ELR PPDU) for the sending (e.g., transmitting) future PPDUs to the STA 1304. The frame 1318 may indicate (e.g., also indicate) the non-ELR PPDU associated with the value of MCS A. The frame 1318 may be a quality of service (QoS) data frame or a QoS null frame. The MCS value of MCS A may be provided in a link adaptation control subfield, for example, in the HLA control subfield described herein for FIG. 9. The frame 1318 may be an unsolicited MFB sent by the STA 1304, for example, based on (e.g., in response to) the ELR PPDU 1306. The MCS value of MCS A may be an action frame or an association response frame. The MCS value of MCS A may be provided in an information element, for example, comprised (e.g., included) in the action frame or the association response frame. The MCS value of MCS A may be provided in an OM control subfield, for example, in the OM control subfield described herein for FIG. 10. The MCS value of MCS A may be an MCS value with an associated data rate, for example, a data rate that is greater than a data rate value of a highest MCS supported by an ELR PPDU. The highest MCS supported by an ELR PPDU may be 1.5 Mbps or 3.0 Mbps. The MCS value of MCS A may be 6.0 Mbps, for example, corresponding to a lowest non-HT PPDU data rate. The MCS value of MCS A may be 7.3 Mbps, for example, corresponding to a lowest HE SU PPDU data rate or a lowest EHT MU PPDU data rate for a full bandwidth 20 MHz PPDU transmission with a 3.2 µs guard interval. The MCS value of MCS A may be 8.1 Mbps, for example, corresponding to a lowest HE SU PPDU data rate or a lowest EHT MU PPDU data rate for a full bandwidth 20 MHz PPDU transmission with a 1.6 µs guard interval. The MCS value of MCS A may be 8.6 Mbps, for example, corresponding to a lowest HE SU PPDU data rate or a lowest EHT MU PPDU data rate for a full bandwidth 20 MHz PPDU transmission with a 0.8 µs guard interval. The STA 1302 may disable use of the ELR PPDU for transmissions to the STA 1304, for example, after or in response to receiving the frame 1318 containing/comprising the value of MCS A that is associated with a non-ELR PPDU format. The STA 1302 may be configured to use a non-ELR PPDU for a time duration, for example, after or in response to receiving the frame 1318 containing/comprising the MCS value of MCS A that is associated with a non-ELR PPDU format.

The STA 1302 may disable the use of the ELR PPDU format for transmission to the STA 1304. The STA 1302 may disable the use of the ELR PPDU format for transmission to the STA 1304, for example, based on receiving the frame 1318 indicating to use the MCS value of MCS A for future PPDUs to the STA 1304. The STA 1302 may send (e.g., transmit) a non-ELR PPDU 1314 to the STA 1304, for example, after or in response to the disabling the use of the ELR PPDU format based on the frame 1318 (e.g., as shown in FIG. 13). The STA 1302 may receive a BA frame 1316 from the STA 1304, for example, based on (e.g., in response to) the non-ELR PPDU 1314. The BA frame 1316 may indicate successful transmission of the non-ELR PPDU 1314.

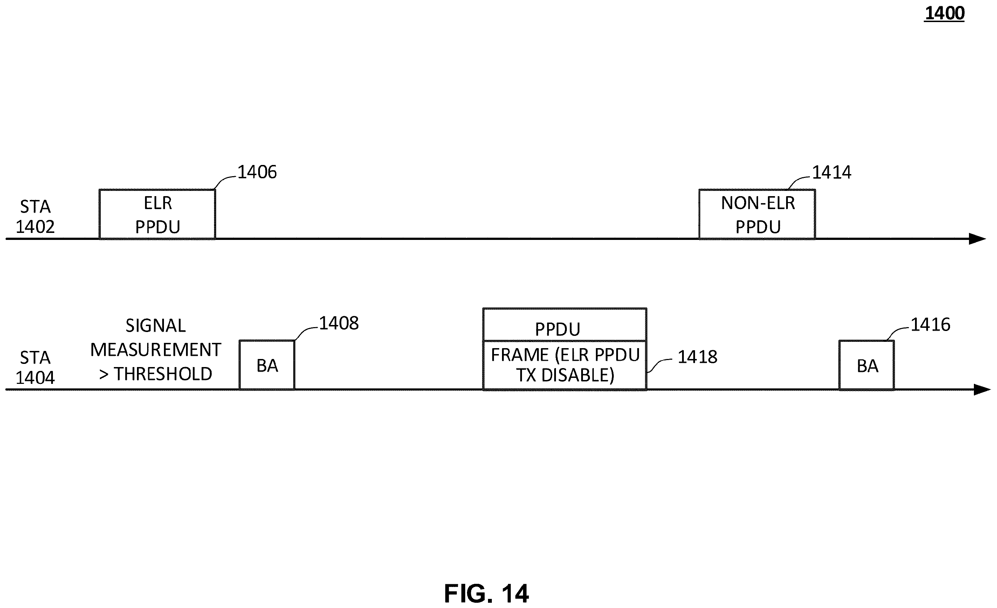

FIG. 14 shows an example of a PPDU format adaptation operation. More specifically, FIG. 14 shows an example 1400 of an operation explicitly indicating disablement of ELR PPDU transmission. The example 1400 may comprise a STA 1402 and a STA 1404, for example, as shown in FIG. 14. The STA 1402 and the STA 1404 may be members of a same BSS. The STA 1402 may be a non-AP STA. The STA 1404 may be an AP STA. The STA 1402 may be associated with the STA 1404, or vice versa.

The STA 1402 may send (e.g., transmit) an ELR PPDU 1406 to the STA 1404, for example, as shown in the example 1400 in FIG. 14. The ELR PPDU 1406 may comprise a format (e.g., the format shown in FIG. 7). An ELR PPDU may allow a STA to increase its transmission range and/or reduce asymmetry between a downlink transmission range of an AP and an uplink transmission range of a STA associated with the AP, for example, as described for FIG. 7. The STA 1402 may be a non-AP STA that uses an ELR PPDU format for all transmissions to the STA 1404 (e.g., as an AP), for example, due to the asymmetry between the downlink and uplink transmission ranges if a non-ELR PPDU format is used. The STA 1404 may receive the ELR PPDU 1406. The STA 1404 may respond with a BA frame 1408 (e.g., shown in FIG. 14), for example, based on (e.g., in response to) receiving the ELR PPDU 1406.

The STA 1404 may be configured to perform a signal measurement of the ELR PPDU 1406. The STA 1404 may perform a signal measurement of the ELR PPDU 1406. The STA 1404 may determine the signal measurement of the ELR PPDU 1406 to be greater than a threshold, for example, as shown in the example 1400 in FIG. 14. The signal measurement may comprise one or more of: a RSSI, a SNR, a SINR, a RCPI, and/or an EVM. The signal measurement exceeding (e.g., being greater than) the threshold may indicate that a non-ELR PPDU sent (e.g., transmitted) by the STA 1402 may be successfully received by the STA 1404. The STA 1402 may send (e.g., transmit, also send, and/or also transmit) using an MCS using an EHT MU PPDU, for example, if an RSSI measurement by the STA 1404 based on the ELR PPDU 1406 indicates that the signal power of the ELR PPDU 1406 exceeds a minimum sensitivity required (e.g., the threshold) for receiving the MCS of the EHT MU PPDU (e.g. EHT-MCS0) by the STA 1404.

The STA 1404 may send (e.g., transmit), to the STA 1402, a frame 1418. The STA 1404 may send (e.g., transmit), to the STA 1402, the frame 1418, for example, based on the signal measurement by the STA 1404 of the ELR PPDU 1406. The frame 1418 may indicate (e.g., explicitly indicate) to the STA 1402 that the STA 1402 may (e.g., shall) use a non-ELR PPDU for sending (e.g., transmitting) future PPDUs to the STA 1404. The frame 1418 may indicate a recommendation/suggestion to the STA 1402 to use a non-ELR PPDU for the sending (e.g., transmitting) future PPDUs to the STA 1404. Additionally, or alternatively, the frame 1418 indicating to use a non-ELR PPDU may comprise (e.g., include) the frame 1418 indicating that the STA 1404 has disabled the reception of ELR PPDUs. The frame 1418 may be a QoS data frame or a QoS null frame. The indication to use a non-ELR PPDU (e.g., the indication that the STA 1404 has disabled the reception of ELR PPDUs) may be provided in a link adaptation control subfield, for example, in the HLA control subfield described herein for FIG. 9. The frame 1418 may be an unsolicited MFB sent by the STA 1404, for example, based on (e.g., in response to) the ELR PPDU 1406. The frame 1418 may be an action frame or an association response frame. The indication to use a non-ELR PPDU (e.g., the indication that the STA 1404 has disabled the reception of ELR-PPDUs) may be provided in an information element (e.g., a UHR Parameters Update element), for example, comprised (e.g., included) in the action frame (e.g., a UHR Link Reconfiguration Request frame) or the association response frame. The indication to use a non-ELR PPDU (e.g., the indication that the STA 1404 has disabled the reception of ELR-PPDUs) may be provided in an OM control subfield, for example, in the OM control subfield described herein for FIG. 10. The STA 1402 may disable use of the ELR PPDU for transmissions to the STA 1404, for example, after or in response to receiving the frame 1418 containing/comprising the indication to use a non-ELR PPDU format. The STA 1402 may be configured to use a non-ELR PPDU for a time duration, for example, after or in response to receiving the frame 1418 containing/comprising the indication to use a non-ELR PPDU format.

The STA 1402 may disable the use of the ELR PPDU format for transmission to the STA 1404. The STA 1402 may disable the use of the ELR PPDU format for transmission to the STA 1404, for example, based on receiving the frame 1418 indicating to use a non-ELR format for future PPDUs to the STA 1404. The STA 1402 may send (e.g., transmit) a non-ELR PPDU 1414 to the STA 1404, for example, after or in response to the disabling the use of the ELR PPDU format based on the frame 1418 (e.g., as shown in FIG. 14). The STA 1402 may receive a BA frame 1416 from the STA 1404, for example, based on (e.g., in response to) the non-ELR PPDU 1414. The BA frame 1416 may indicate successful transmission of the non-ELR PPDU 1414.

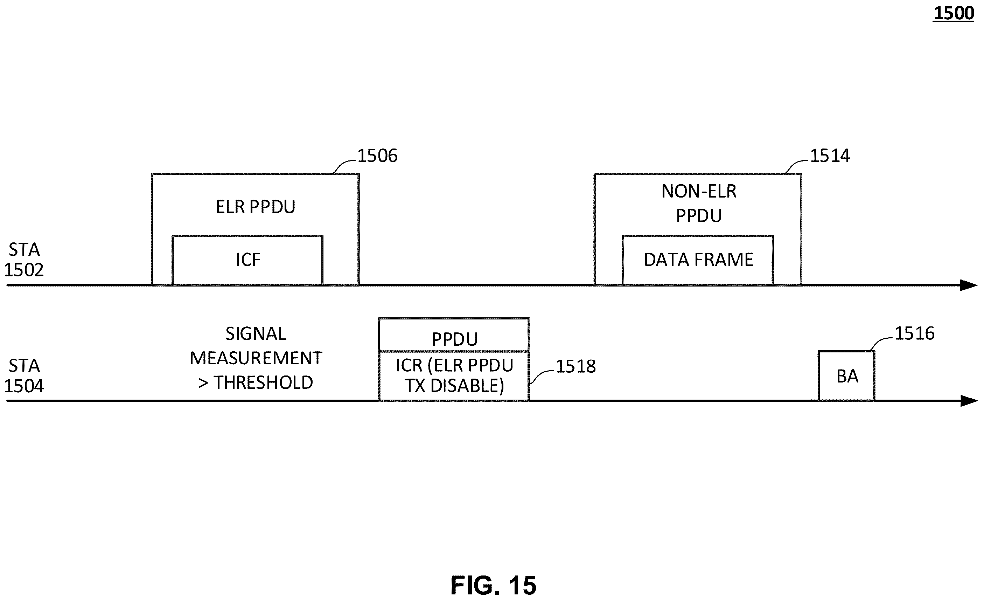

FIG. 15 shows an example of a PPDU format adaptation operation. More specifically, FIG. 15 shows an example 1500 of an operation indicating disablement of ELR PPDU transmission. The example 1500 may comprise a STA 1502 and a STA 1504, for example, as shown in FIG. 15. The STA 1502 and the STA 1504 may be members of a same BSS. The STA 1502 may be a non-AP STA. The STA 1504 may be an AP STA. The STA 1502 may be associated with the STA 1504, or vice versa.

The STA 1502 may send (e.g., transmit) an ELR PPDU 1506 to the STA 1504, for example, as shown in the example 1500 in FIG. 15. The ELR PPDU 1506 may comprise a format (e.g., the format shown in FIG. 7). An ELR PPDU may allow a STA to increase its transmission range and/or reduce asymmetry between a downlink transmission range of an AP and an uplink transmission range of a STA associated with the AP, for example, as described for FIG. 7. The STA 1502 may be a non-AP STA that uses an ELR PPDU format for all transmissions to the STA 1504 (e.g., as an AP), for example, due to the asymmetry between the downlink and uplink transmission ranges if a non-ELR PPDU format is used. The ELR PPDU 1506 may carry an initial control frame (ICF), for example, as shown in FIG. 15. The ICF may be a frame that initiates a transmission opportunity (TXOP). The TXOP (e.g., the TXOP of the example 1500 shown in FIG. 15) may be a TXOP obtained by the STA 1502, for example, before (e.g., right before) sending (e.g., transmitting) the ELR PPDU 1506. The ICF may be a trigger frame, a request to send frame, a clear to send frame, QoS data frame, and/or a QoS null frame. The ICF may indicate that the STA 1502 may (e.g., shall, is to) send (e.g., transmit) a data frame using a PPDU with an ELR format. The STA 1502 may be configured to send (e.g., transmit) the data frame, for example, after (e.g., immediately after or after a short interframe space duration) or in response to receiving a response for the ICF. The STA 1504 may receive the ELR PPDU 1506. The STA 1504 may respond with an ICF response (ICR) frame 1518 (e.g., shown in FIG. 15), for example, based on (e.g., in response to) receiving the ELR PPDU 1506.

The STA 1504 may be configured to perform a signal measurement of the ELR PPDU 1506. The STA 1504 may perform a signal measurement of the ELR PPDU 1506. The STA 1504 may determine the signal measurement of the ELR PPDU 1506 to be greater than a threshold, for example, as shown in the example 1500 in FIG. 15. The signal measurement may comprise one or more of: a RSSI, a SNR, a SINR, a RCPI, and/or an EVM. The signal measurement exceeding (e.g., being greater than) the threshold may indicate that a non-ELR PPDU sent (e.g., transmitted) by the STA 1502 may be received (e.g., successfully received) by the STA 1504. The STA 1502 may send (e.g., transmit, also send, and/or also transmit) at an MCS using an EHT MU PPDU, for example, if an RSSI measurement by the STA 1504 based on the ELR PPDU 1506 indicates that the signal power of the ELR PPDU 1506 exceeds a minimum sensitivity required (e.g., the threshold) for receiving the MCS of the EHT MU PPDU (e.g. EHT-MCS0) by STA 1504.

The STA 1504 may send (e.g., transmit), to the STA 1502, an ICR frame 1518. The STA 1504 may send (e.g., transmit), to the STA 1502, the ICR frame 1518, for example, based on the signal measurement by the STA 1504 of the ELR PPDU 1506. The ICR frame 1518 may indicate (e.g., explicitly indicate) to the STA 1502 that the STA 1502 may (e.g., shall) use a non-ELR PPDU for sending (e.g., transmitting) future PPDUs to the STA 1504. The ICR frame 1518 may indicate a recommendation/suggestion to the STA 1502 to use a non-ELR PPDU for the sending (e.g., transmitting) future PPDUs to the STA 1504. The ICR frame 1518 may indicate an MCS value of MCS A (e.g., not shown in FIG. 15), for example, associated with a non-ELR PPDU. The MCS value of MCS A (e.g., associated with a non-ELR PPDU) may indicate to the STA 1502 that the STA 1502 may (e.g., shall) use a non-ELR PPDU for sending (e.g., transmitting) future PPDUs to the STA 1502 (e.g., described in the example 1300 for FIG. 13). The STA 1502 may disable use of the ELR PPDU for transmissions to the STA 1504, for example, after or in response to receiving the ICR frame 1518 containing/comprising the indication to use a non-ELR PPDU format. The STA 1502 may be configured to use a non-ELR PPDU for a time duration, for example, after or in response to receiving the ICR frame 1518 containing/comprising the indication to use a non-ELR PPDU format.

The STA 1502 may disable the use of the ELR PPDU format for transmission to the STA 1504. The STA 1502 may disable the use of the ELR PPDU format for transmission to the STA 1504, for example, based on receiving the ICR frame 1518 indicating to use a non-ELR format for future PPDUs to the STA 1504. The STA 1502 may send (e.g., transmit) a non-ELR PPDU 1514 to the STA 1504, for example, after or in response to the disabling the use of the ELR PPDU format based on ICR frame 1518 (e.g., as shown in FIG. 15). The STA 1502 may receive a BA frame 1516 from the STA 1504, for example, based on (e.g., in response to) the non-ELR PPDU 1514. The BA frame 1516 may indicate transmission (e.g., successful transmission) of the non-ELR PPDU 1514.

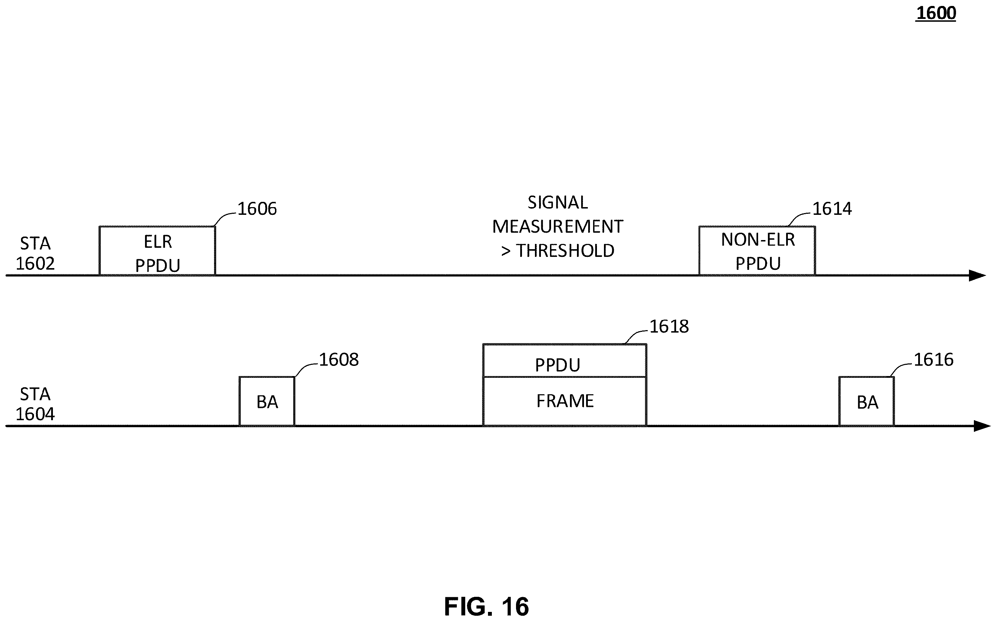

FIG. 16 shows an example of a PPDU format adaptation operation. More specifically, FIG. 15 shows an example 1600 of an operation indicating disablement of ELR PPDU transmissions. The example 1600 may include/comprise a STA 1602 and a STA 1604, for example, as shown in FIG. 16. The STA 1602 and the STA 1604 may be members of a same BSS. The STA 1602 may be a non-AP STA. The STA 1604 may be an AP STA. The STA 1602 may be associated with the STA 1604, or vice versa.

The STA 1602 may send (e.g., transmit) an ELR PPDU 1606 to the STA 1604, for example, as shown in the example 1600 in FIG. 16. The ELR PPDU 1606 may comprise a format (e.g., the format shown in FIG. 7). An ELR PPDU may allow a STA to increase its transmission range and/or reduce asymmetry between a downlink transmission range of an AP and an uplink transmission range of a STA associated with the AP, for example, as described for FIG. 7. The STA 1602 may be a non-AP STA that uses an ELR PPDU format for all transmissions to the STA 1604 (e.g., as an AP), for example, due to the asymmetry between the downlink and uplink transmission ranges if a non-ELR PPDU format is used. The STA 1604 may receive the ELR PPDU 1606. The STA 1604 may respond with a BA frame 1608 (e.g., shown in FIG. 16), for example, based on (e.g., in response to) receiving the ELR PPDU 1606.

The STA 1602 may be configured to perform a signal measurement of a PPDU sent (e.g., transmitted) by the STA 1604. The STA 1602 may be configured to perform a signal measurement of a PPDU sent (e.g., transmitted) by the STA 1604, for example, to determine use, by the STA 1602, of a non-ELR PPDU format for transmission to the STA 1604. The STA 1602 may receive a PPDU 1618 from the STA 1604, for example, as shown in the example 1600 in FIG. 16. The STA 1602 may perform a signal measurement of the PPDU 1618. The STA 1602 may determine the PPDU 1618 to be greater than a threshold, for example, as shown in the example 1600 in FIG. 16. The signal measurement may comprise one or more of: a RSSI, a SNR, a SINR, a RCPI, and an EVM. The signal measurement exceeding (e.g., being greater than) the threshold may indicate that a non-ELR PPDU sent (e.g., transmitted) by the STA 1602 may be received (e.g., successfully received) by the STA 1604. The STA 1602 may send (e.g., transmit, also send, and/or also transmit) using an MCS using an EHT MU PPDU, for example, if an RSSI measurement by the STA 1602 (e.g., based on the PPDU 1618) indicates that a received signal power R1 by the STA 1604 for a PPDU sent (e.g., transmitted) by the STA 1602 exceeds a minimum sensitivity S (e.g., the threshold) required for receiving the MCS of the EHT MU PPDU (e.g. EHT-MCS0) by the STA 1604.

The STA 1602 may be configured to perform a signal measurement of a PPDU sent (e.g., transmitted) by the STA 1604. The PPDU 1618 may indicate a send power (e.g., transmit power) P1 used to send (e.g., transmit) the PPDU 1618. The send (e.g., transmit power) P1 may be provided in an information element of a management frame carried by the PPDU 1618. The send power (e.g., transmit power) P1 may be carried in an HT control field, for example, if the PPDU 1618 carries a QoS data frame or a QoS null frame. The send power (e.g., transmit power) P1 may be carried in a common info field or a user info field of the control frame, for example, if the PPDU 1618 carries a control frame (e.g., a trigger frame or an initial control frame). The STA 1602 may compute a pathloss L of the channel between the STA 1602 and the STA 1604, for example, using L=P1-R1 based on (e.g., from) the received signal power R1 of the PPDU 1618 and the send power (e.g., transmit power) P1 indicated in the PPDU 1618. The STA 1602 may determine an estimate of a received signal power R2, for example, based on the pathloss L. The received signal power R2 may be measured by the STA 1604 for a PPDU sent (e.g., transmitted) by the STA 1602. The received signal power R2 may be computed using R2=P2-L, where P2 is a send power (e.g., transmit power) used by the STA 1602. The STA 1602 may send (e.g., transmit, also send, and/or also transmit) using an MCS using an EHT MU PPDU, for example, if the received signal power R2 exceeds the minimum sensitivity required (e.g., the threshold) for receiving the MCS of the EHT MU PPDU (e.g., EHT-MCS0) by the STA 1604.

The STA 1602 may disable the use of the ELR PPDU format for transmissions to the STA 1604. The STA 1602 may disable the use of the ELR PPDU format for transmissions to the STA 1604, for example, based on the signal measurement by the STA 1602 of the PPDU 1618 being greater than a threshold. The STA 1602 may send (e.g., transmit) a non-ELR PPDU 1614 to the STA 1604, for example, after or in response to the disabling the use of the ELR PPDU format based on the PPDU 1618 (e.g., as shown in FIG. 16). The STA 1602 may receive a BA frame 1616 from the STA 1604, for example, based on (e.g., in response to) the non-ELR PPDU 1614. The BA frame 1616 may indicate transmission (e.g., successful transmission) of the non-ELR PPDU 1614.

An AP may indicate, to a STA, disablement of ELR PPDU transmissions. As would be understood by a person of skill in the art based on the teachings herein, the disclosure is not limited to the examples described herein (e.g., the example 1300 shown in FIG. 13, the example 1400 shown in FIG. 14, the example 1500 shown in FIG. 15, and/or the example 1600 shown in FIG. 16). The teachings herein for a PPDU format adaptation operation may be readily extended to examples comprising more than one STA. The teachings herein for a PPDU format adaptation operation may be readily extended to examples comprising more than one AP. The teachings herein for a PPDU format adaptation operation may be readily extended to examples in which any of the one or more APs and/or any of the one or more STAs may comprise a MLD, for example, comprising at least one affiliated AP and/or at least one affiliated STA.

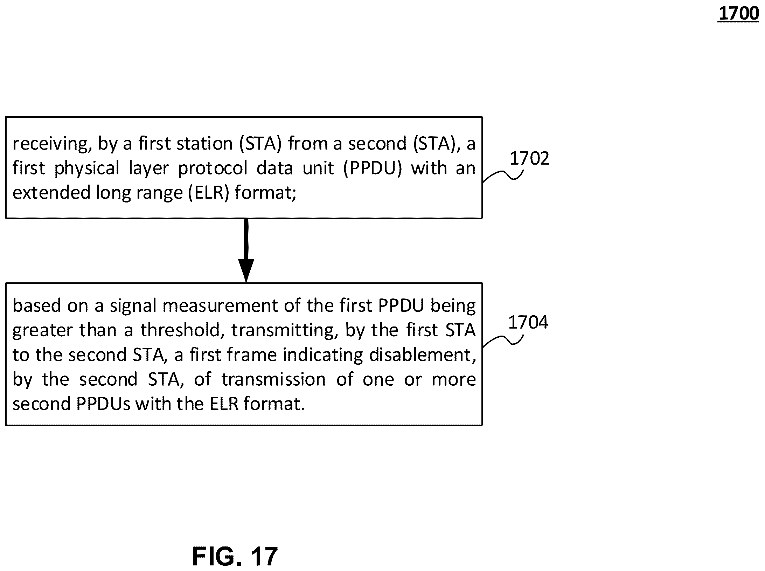

FIG. 17 shows an example of sending an indication of ELR PPDU disablement. An example process 1700 (e.g., shown in FIG. 17) may be performed by a STA or an AP (e.g., the STA 1304 shown in FIG. 13, the STA 1404 shown in FIG. 14, and/or the STA 1504 shown in FIG. 15). The process 1700 may comprise steps 1702 and 1704, for example, as shown in FIG. 17.

Step 1702 may comprise receiving, by a first station (STA) from a second STA, a first physical layer protocol data unit (PPDU) with an extended/enhanced long range (ELR) format. The ELR format may comprise at least one mark symbol, for example, indicating a basic service set (BSS) color of the first PPDU. The ELR format may comprise at least one mark symbol, for example, indicating a format of the first PPDU.

Step 1704 may comprise, based on a signal measurement of the first PPDU being greater than a threshold, sending (e.g., transmitting), by the first STA to the second STA, a first frame indicating disablement/deactivation, by the second STA, of transmission (e.g., of one or more second PPDUs) with the ELR format. The first frame may be a QoS Data frame or a QoS Null frame. A high throughput (HT) Control field of the QoS Data frame or the QoS null frame may comprise an indication of disablement/deactivation of transmission with the ELR format. The indication may indicate that the second STA is to (e.g., may, shall) use a non-ELR format for transmission to the first STA. The indication may indicate that the second STA is not allowed to use an ELR format for transmission to the first STA. The indication of disablement/deactivation of transmission with the ELR format may be active for a time duration, for example, after or in response to receiving the first frame. The indication may be provided in a link adaptation subfield of the HT Control field. The link adaptation subfield may be a high efficiency link adaptation (HLA) subfield, an extremely high throughput link adaptation (ELA) subfield, or an ultra-high reliability link adaptation subfield (ULA). The indication may indicate (e.g., further indicate) a modulation and coding scheme (MCS) feedback (MFB). The indication may indicate (e.g., further indicate) that the MFB is an unsolicited MFB based on the first PPDU. The MFB may comprise (e.g., include) an MCS indicating a data rate, for example, a data rate that is greater than or equal to a first data rate. The first data rate may be equal to a data rate of a second PPDU with a non-ELR format. The non-ELR format may be a non-high throughput (HT) PPDU, an HT PPDU, a high efficiency (HE) single user (SU) PPDU, an HE multi-user (MU) PPDU, an extremely high throughput (EHT) MU PPDU, or a non-ELR ultra high throughput (UHR) PPDU. The first data rate may comprise 6.0 Mbps, 7.3 Mbps, 8.1 Mbps, or 8.6 Mbps. An index of the indicated MCS may include/comprise 0 (e.g., HT-MCS0, VHT-MCS0, HE-MCS0, EHT-MCS0, and/or UHR-MCS0).

The first PPDU may carry an initial control frame. The first frame may be an initial control response frame. The first PPDU may carry a QoS data frame, a QoS null frame, or a management frame. The first frame may be an acknowledgement frame or a block acknowledgement frame.

The process 1700 may further comprise receiving, by the first STA from the second STA, a second frame. The second frame may indicate enablement, by the second STA, of transmission with the ELR format. The second frame may be a quality of service (QoS) data frame, a QoS Null frame, an action frame, or a (re)association request frame.

The first STA may be configured to perform the signal measurement of the first PPDU. The signal measurement may comprise (e.g., include) measurement of a RSSI, a SNR, a SINR, a RCPI, and/or an EVM of the first PPDU.

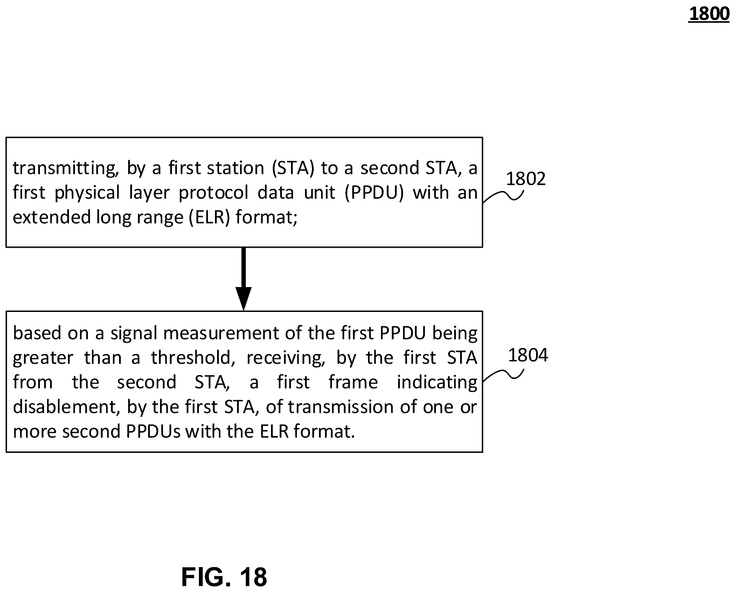

FIG. 18 shows an example of receiving an indication of ELR PPDU disablement. An example process 1800 (e.g., shown in FIG. 18) may be performed by a STA or an AP (e.g., the STA 1302 shown in FIG. 13, the STA 1402 shown in FIG. 14, and/or the STA 1502 shown in FIG. 15). The process 1800 may comprise steps 1802 and 1804, for example, as shown in FIG. 18.

Step 1802 may comprise sending (e.g., transmitting), by a first station (STA) to a second STA, a first physical layer protocol data unit (PPDU) with an extended/enhanced long range (ELR) format. The ELR format may comprise at least one mark symbol, for example, indicating a basic service set (BSS) color of the first PPDU. The ELR format may comprise at least one mark symbol, for example, indicating a format of the first PPDU.

Step 1804 may comprise, based on a signal measurement of the first PPDU being greater than a threshold, receiving, by the first STA from the second STA, a first frame indicating disablement/deactivation, by the first STA, of transmission (e.g., of one or more second PPDUs) with the ELR format. The first frame may be a QoS Data frame or a QoS Null frame. A high throughput (HT) Control field of the QoS Data frame or the QoS null frame may comprise an indication of disablement/deactivation of transmission with the ELR format. The indication may indicate that the first STA is to (e.g., may, shall) use a non-ELR format for transmission to the second STA. The indication may indicate that the first STA is not allowed to use an ELR format for transmission to the second STA. The indication of disablement/deactivation of transmission with the ELR format may be active for a time duration, for example, after or in response to receiving the first frame. The indication may be provided in a link adaptation subfield of the HT Control field. The link adaptation subfield may be a HLA subfield, an ELA subfield, or an ULA. The indication may indicate (e.g., further indicate) an MFB. The indication may indicate (e.g., further indicate) that the MFB is an unsolicited MFB based on the first PPDU. The MFB may comprise (e.g., include) an MCS indicating a data rate, for example, a data rate that is greater than or equal to a first data rate. The first data rate may be equal to a data rate of a second PPDU with a non-ELR format. The non-ELR format may be a non-HT PPDU, an HT PPDU, an HE SU PPDU, an HE MU PPDU, an EHT MU PPDU or a non-ELR UHR PPDU. The first data rate may comprise 6.0 Mbps, 7.3 Mbps, 8.1 Mbps, or 8.6 Mbps. An index of the indicated MCS may include/comprise 0 (e.g., HT-MCS0, VHT-MCS0, HE-MCS0, EHT-MCS0, and/or UHR-MCS0).

The first PPDU may carry an initial control frame. The first frame may be an initial control response frame. The first PPDU may carry a QoS data frame, a QoS null frame, or a management frame. The first frame may be an acknowledgement frame or a block acknowledgement frame.

The process 1800 may further comprise sending (e.g., transmitting), by the first STA to the second STA, a second frame. The second frame may indicate enablement, by the first STA, of transmission with the ELR format. The second frame may be a quality of service (QoS) data frame, a QoS Null frame, an action frame, or a (re)association request frame.

The second STA may be configured to perform the signal measurement of the first PPDU. The signal measurement may comprise (e.g., include) measurement of a RSSI, a SNR, a SINR, a RCPI, and/or an EVM of the first PPDU.

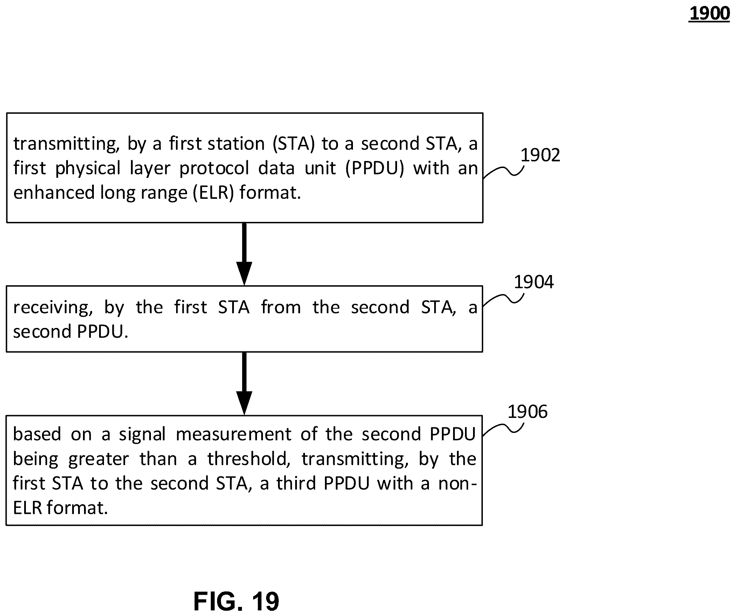

FIG. 19 shows an example of a PPDU format adaptation operation. An example process 1900 may be performed by a STA or an AP (e.g., the STA 1602 in FIG. 16). The process 1900 may comprise steps 1902, 1904 and 1906, for example, as shown in FIG. 19.

Step 1902 may comprise sending (e.g., transmitting), by a first station (STA) to a second STA, a first physical layer protocol data unit (PPDU) with an enhanced long range (ELR) format. The ELR format may comprise at least one mark symbol, for example, indicating a basic service set (BSS) color of the first PPDU. The ELR format may comprise at least one mark symbol, for example, indicating a format of the first PPDU.

Step 1904 may comprise receiving, by the first STA from the second STA, a second PPDU. The second PPDU may comprise an ELR format. The second PPDU may comprise a non-ELR format.

Step 1906 may comprise sending (e.g., transmitting), by the first STA to the second STA, a third PPDU with a non-ELR format. The first STA may send (e.g., transmit), to the second STA, the third PPDU with a non-ELR format, for example, based on a signal measurement of the second PPDU being greater than a threshold.

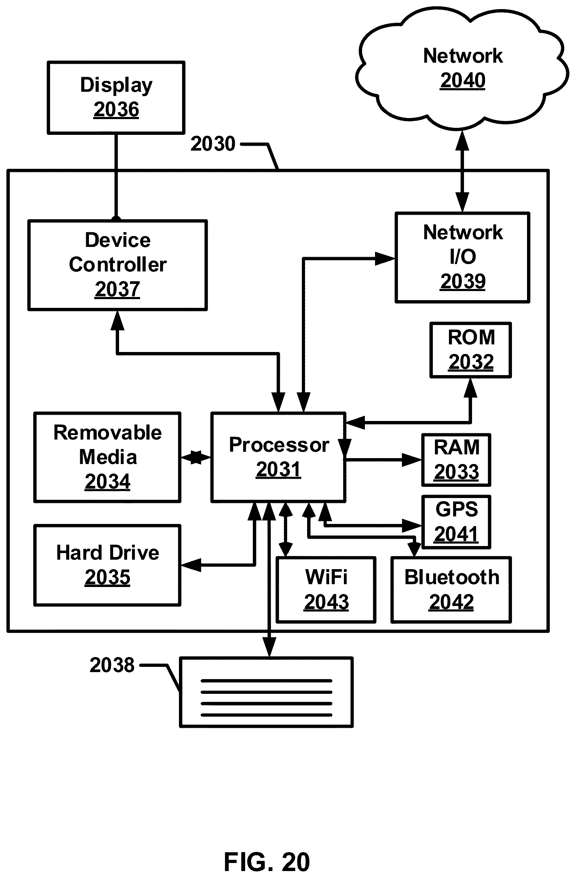

FIG. 20 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 802, 1102, 1104, 1106, 1202, 1302, 1402, 1502, 1602), an AP (e.g., 104-1, 104-2, 804, 1204, 1304, 1404, 1504, 1604), communication devices (e.g., 210, 260), and/or any computing and/or communication device described herein. The computing device 2030 may comprise one or more processors 2031, which may execute instructions stored in the random-access memory (RAM) 2033, the removable media 2034 (such as a Universal Serial Bus (USB) drive, compact disk (CD) or digital versatile disk (DVD), or floppy disk drive), or any other desired storage medium. Instructions may also be stored in an attached (or internal) hard drive 2035. The computing device 2030 may also comprise a security processor (not shown), which may execute instructions of one or more computer programs to monitor the processes executing on the processor 2031 and any process that requests access to any hardware and/or software components of the computing device 2030 (e.g., ROM 2032, RAM 2033, the removable media 2034, the hard drive 2035, the device controller 2037, a network interface 2039, a GPS 2041, a Bluetooth interface 2042, a WiFi interface 2043, etc.). The computing device 2030 may comprise one or more output devices, such as the display 2036 (e.g., a screen, a display device, a monitor, a television, etc.), and may comprise one or more output device controllers 2037, such as a video processor. There may also be one or more user input devices 2038, such as a remote control, keyboard, mouse, touch screen, microphone, etc. The computing device 2030 may also comprise one or more network interfaces, such as a network interface 2039, which may be a wired interface, a wireless interface, or a combination of the two. The network interface 2039 may provide an interface for the computing device 2030 to communicate with a network 2040 (e.g., a RAN, or any other network). The network interface 2039 may comprise a modem (e.g., a cable modem), and the external network 2040 may comprise communication links, an external network, an in-home network, a provider's wireless, coaxial, fiber, or hybrid fiber/coaxial distribution system (e.g., a DOCSIS network), or any other desired network. Additionally, the computing device 2030 may comprise a location-detecting device, such as a global positioning system (GPS) microprocessor 2041, which may be configured to receive and process global positioning signals and determine, with possible assistance from an external server and antenna, a geographic position of the computing device 2030.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by an access point, a first frame indicating enablement of transmission using an enhanced long range (ELR) format.

Clause 2. The method of clause 1, further comprising receiving a physical layer protocol data unit (PPDU) that is configured with the ELR format.

Clause 3. The method of clause 1 or clause 2, further comprising, based on a signal measurement of the PPDU satisfying a threshold, sending a second frame indicating disablement of transmission using the ELR format.

Clause 4. The method of any one of clauses 1 to 3, further comprising receiving, after sending the second frame, a second PPDU that is configured with a non-ELR format.

Clause 5. The method of any one of clauses 1 to 4, wherein the second frame comprises a high throughput (HT) control field comprising an indication of the disablement of transmission using the ELR format.

Clause 6. The method of any one of clauses 1 to 5, wherein the signal measurement comprises a receive signal strength indicator (RSSI).

Clause 7. The method of any one of clauses 1 to 6, wherein the signal measurement comprises a signal to noise ratio (SNR).

Clause 8. The method of any one of clauses 1 to 7, wherein the signal measurement comprises a signal to interference plus noise ratio (SINR).

Clause 9. The method of any one of clauses 1 to 8, wherein the signal measurement comprises a received channel power indicator (RCPI).

Clause 10. The method of any one of clauses 1 to 9, wherein the signal measurement comprises an error vector magnitude (EVM).

Clause 11. The method of any one of clauses 1 to 10, wherein the ELR format comprises at least one mark symbol indicating a basic service set (BSS) color of the PPDU.

Clause 12. The method of any one of clauses 1 to 11, wherein the ELR format comprises at least one mark symbol indicating a format of the PPDU.

Clause 13. The method of any one of clauses 1 to 12, wherein the first frame comprises a quality of service (QoS) Data frame.

Clause 14. The method of any one of clauses 1 to 13, wherein the first frame comprises a QoS Null frame.

Clause 15. The method of any one of clauses 1 to 14, wherein the first frame comprises an action frame.

Clause 16. The method of any one of clauses 1 to 15, wherein the first frame comprises an (re)association request frame.

Clause 17. The method of any one of clauses 1 to 16, wherein the second frame comprises a quality of service (QoS) Data frame or a QoS Null frame.

Clause 18. The method of any one of clauses 1 to 17, wherein the PPDU comprises an initial control frame and the second frame comprises an initial control response frame.

Clause 19. The method of any one of clauses 1 to 18, wherein the indication indicates to use the non-ELR format for transmission to the access point.

Clause 20. The method of any one of clauses 1 to 19, wherein the non-ELR format comprises one of: a non-high throughput (HT) PPDU; an HT PPDU; a high efficiency (HE) single user (SU) PPDU; an HE multi-user (MU) PPDU; an extremely high throughput (EHT) MU PPDU; or a non-ELR ultra high throughput (UHR) PPDU.

Clause 21. The method of any one of clauses 1 to 20, further comprising determining the signal measurement of the PPDU.

Clause 22. The method of any one of clauses 1 to 21, further comprising determining that the signal measurement of the PPDU satisfies the threshold by being greater than the threshold.

Clause 23. The method of any one of clauses 1 to 22, wherein the indicating disablement of transmission using the ELR format is active for a time duration after sending the second frame.

Clause 24. The method of any one of clauses 1 to 23, wherein the indicating disablement of transmission using the ELR format further indicates a modulation and coding scheme (MCS) feedback (MFB).

Clause 25. The method of any one of clauses 1 to 24, wherein the indicating disablement of transmission using the ELR format further indicates that the MFB comprises an unsolicited MFB based on the PPDU.

Clause 26. The method of any one of clauses 1 to 25, wherein the MFB comprises an MCS indicating a data rate that is greater than or equal to a data rate of a second PPDU that is configured with a non-ELR format.

Clause 27. A computing device comprising: one or more processors; and memory storing instructions that, when executed by the one or more processors, cause the computing device to perform the method of any one of clauses 1 to 26.

Clause 28. A system comprising: an access point configured to perform the method of any one of clauses 1 to 26; and a station configured to send the first frame and receive the second frame.

Clause 29. A computer-readable medium storing instructions that, when executed, cause the performance of the method of any one of clauses 1 to 26.

Clause 30. A method comprising receiving, by an access point, a first physical layer protocol data unit (PPDU) that is configured with an enhanced long range (ELR) format.

Clause 31. The method of clause 30, further comprising, based on a signal measurement of the first PPDU satisfying a threshold, sending a first frame comprising an indication of disablement of transmission using the ELR format.

Clause 32. The method of clause 30 or clause 31, further comprising receiving a second PPDU that is configured with a non-ELR format.

Clause 33. The method of any one of clauses 30 to 32, further comprising determining a signal measurement of the first PPDU.

Clause 34. The method of any one of clauses 30 to 33, further comprising determining that the signal measurement of the first PPDU satisfies the threshold by being greater than the threshold.

Clause 35. The method of any one of clauses 30 to 34, further comprising receiving a second frame indicating enablement of transmission using the ELR format.

Clause 36. The method of any one of clauses 30 to 35, wherein the indication of the disablement of transmission using the ELR format is provided in a link adaptation subfield of a high throughput (HT) control field.

Clause 37. The method of any one of clauses 30 to 36, wherein the indication of the disablement of transmission using the ELR format is active for a time duration after receiving the first frame.

Clause 38. The method of any one of clauses 30 to 37, wherein the indication of the disablement of transmission using the ELR format further indicates a modulation and coding scheme (MCS) feedback (MFB).

Clause 39. The method of any one of clauses 30 to 38, wherein the indication of the disablement of transmission using the ELR format further indicates that the MFB comprises an unsolicited MFB based on the first PPDU.

Clause 40. The method of any one of clauses 30 to 39, wherein the MFB comprises an MCS indicating a data rate that is greater than or equal to a data rate of the second PPDU that is configured with the non-ELR format.

Clause 41. The method of any one of clauses 30 to 40, wherein the access point is a station.

Clause 42. The method of any one of clauses 30 to 41, wherein the non-ELR format comprises one of: a non-high throughput (HT) PPDU; an HT PPDU; a high efficiency (HE) single user (SU) PPDU; an HE multi-user (MU) PPDU; an extremely high throughput (EHT) MU PPDU; or a non-ELR ultra high throughput (UHR) PPDU.

Clause 43. The method of any one of clauses 30 to 42, wherein the signal measurement comprises a receive signal strength indicator (RSSI).

Clause 44. The method of any one of clauses 30 to 43, wherein the signal measurement comprises a signal to noise ratio (SNR).

Clause 45. The method of any one of clauses 30 to 44, wherein the signal measurement comprises a signal to interference plus noise ratio (SINR).

Clause 46. The method of any one of clauses 30 to 45, wherein the signal measurement comprises a received channel power indicator (RCPI).

Clause 47. The method of any one of clauses 30 to 46, wherein the signal measurement comprises an error vector magnitude (EVM).

Clause 48. The method of any one of clauses 30 to 47, wherein the ELR format comprises at least one mark symbol indicating a basic service set (BSS) color of the PPDU.

Clause 49. The method of any one of clauses 30 to 48, wherein the ELR format comprises at least one mark symbol indicating a format of the PPDU.

Clause 50. A computing device comprising: one or more processors; and memory storing instructions that, when executed by the one or more processors, cause the computing device to perform the method of any one of clauses 30 to 49.

Clause 51. A system comprising: an access point configured to perform the method of any one of clauses 30 to 49; and a station configured to receive the first frame.

Clause 52. A computer-readable medium storing instructions that, when executed, cause the performance of the method of any one of clauses 30 to 49.

Clause 53. A method comprising sending, by a station, a first frame indicating enablement of transmission using an enhanced long range (ELR) format.

Clause 54. The method of clause 53, further comprising sending a physical layer protocol data unit (PPDU) that is configured with the ELR format.

Clause 55. The method of clause 53 or clause 54, further comprising, based on a signal measurement of the PPDU satisfying a threshold, receiving a second frame indicating disablement of transmission using the ELR format.

Clause 56. The method of any one of clauses 53 to 55, further comprising sending, after receiving the second frame, a second PPDU that is configured with a non-ELR format.

Clause 57. The method of any one of clauses 53 to 56, wherein the second frame comprises a high throughput (HT) control field comprising an indication of the disablement of transmission using the ELR format.

Clause 58. The method of any one of clauses 53 to 57, wherein the signal measurement comprises a receive signal strength indicator (RSSI).

Clause 59. The method of any one of clauses 53 to 58, wherein the signal measurement comprises a signal to noise ratio (SNR).

Clause 60. The method of any one of clauses 53 to 59, wherein the signal measurement comprises a signal to interference plus noise ratio (SINR).

Clause 61. The method of any one of clauses 53 to 60, wherein the signal measurement comprises a received channel power indicator (RCPI).

Clause 62. The method of any one of clauses 53 to 61, wherein the signal measurement comprises an error vector magnitude (EVM).

Clause 63. The method of any one of clauses 53 to 62, wherein satisfying the threshold comprises the signal measurement of the PPDU being greater than the threshold.

Clause 64. The method of any one of clauses 53 to 63, wherein the ELR format comprises at least one mark symbol indicating a basic service set (BSS) color of the PPDU.

Clause 65. The method of any one of clauses 53 to 64, wherein the ELR format comprises at least one mark symbol indicating a format of the PPDU.

Clause 66. A computing device comprising: one or more processors; and memory storing instructions that, when executed by the one or more processors, cause the computing device to perform the method of any one of clauses 53 to 65.

Clause 67. A system comprising: a station configured to perform the method of any one of clauses 53 to 65; and an access point configured to receive the first frame and send the second frame.

Clause 68. A computer-readable medium storing instructions that, when executed, cause performance of the method of any one of clauses 53 to 65.

Clause 69. A method comprising receiving, by an access point (AP) from a station (STA), a first frame indicating enablement, by the STA, of transmission with an enhanced long range (ELR) format.

Clause 70. The method of clause 69, further comprising receiving, by the AP from the STA, a physical layer protocol data unit (PPDU) with the ELR format.

Clause 71. The method of clause 69 or clause 70, further comprising, based on a signal measurement of the PPDU being greater than a threshold, transmitting, by the AP to the STA, a second frame indicating disablement, by the STA, of transmission with the ELR format.

Clause 72. A computing device comprising: one or more processors; and memory storing instructions that, when executed by the one or more processors, cause the computing device to perform the method of any one of clauses 69 to 71.

Clause 73. A system comprising: an access point (AP) configured to perform the method of any one of clauses 69 to 71; and a station (STA) configured to send the first frame and receive the second frame.

Clause 74. A computer-readable medium storing instructions that, when executed, cause the performance of the method of any one of clauses 69 to 71.

Clause 75. A method comprising receiving, by a first station (STA) from a second (STA), a first physical layer protocol data unit (PPDU) with an enhanced long range (ELR) format.

Clause 76. The method of clause 75, further comprising, based on a signal measurement of the first PPDU being greater than a threshold, transmitting, by the first STA to the second STA, a first frame indicating disablement, by the second STA, of transmission with the ELR format.

Clause 77. The method of clause 75 or clause 76, wherein the first frame comprises a QoS Data frame or a Qos Null frame.

Clause 78. The method of any one of clauses 75 to 77, wherein the first frame comprises a high throughput (HT) Control field comprising an indication of disablement of transmission with the ELR format.

Clause 79. The method of any one of clauses 75 to 78, wherein the indication is provided in a link adaptation subfield of the HT Control field.

Clause 80. The method of any one of clauses 75 to 79, wherein the indication further indicates a modulation and coding scheme (MCS) feedback (MFB).

Clause 81. The method of any one of clauses 75 to 80, wherein the indication further indicates that the MFB comprises an unsolicited MFB based on the first PPDU.

Clause 82. The method of any one of clauses 75 to 81, wherein the MFB comprises an MCS indicating a data rate that is greater than or equal to a first data rate.

Clause 83. The method of any one of clauses 75 to 82, wherein the first data rate is equal to a data rate of a second PPDU with a non-ELR format.

Clause 84. The method of any one of clauses 75 to 83, wherein the non-ELR format comprises one of: a non-high throughput (HT) PPDU; an HT PPDU; a high efficiency (HE) single user (SU) PPDU; an HE multi-user (MU) PPDU; an extremely high throughput (EHT) MU PPDU; and a non-ELR ultra high throughput (UHR) PPDU.

Clause 85. The method of any one of clauses 75 to 84, wherein the first data rate comprises at least one of: 6.0 Mbps; 7.3 Mbps; 8.1 Mbps; and 8.6 Mbps.

Clause 86. The method of any one of clauses 75 to 85, wherein an index of the MCS comprises 0.

Clause 87. The method of any one of clauses 75 to 86, wherein the indication indicates that the second STA is to use a non-ELR format for transmission to the first STA.

Clause 88. The method of any one of clauses 75 to 87, wherein the indication indicates that the second STA is not allowed to use an ELR format for transmission to the first STA.

Clause 89. The method of any one of clauses 75 to 88, wherein the first PPDU comprises an initial control frame.

Clause 90. The method of any one of clauses 75 to 89, wherein the first frame comprises an initial control response frame.

Clause 91. The method of any one of clauses 75 to 90, further comprising receiving, by the first STA from the second STA, a second frame indicating enablement, by the second STA, of transmission with the ELR format.

Clause 92. The method of any one of clauses 75 to 91, wherein the second frame comprises at least one of: a quality of service (QoS) Data frame; a QoS Null frame; an action frame; and an (re)association request frame.

Clause 93. The method of any one of clauses 75 to 92, wherein the signal measurement comprises at least one of: a receive signal strength indicator; a signal to noise ratio; a signal to interference plus noise ratio; a received channel power indicator; and an error vector magnitude.

Clause 94. The method of any one of clauses 75 to 93, wherein the first STA comprises an access point.

Clause 95. The method of any one of clauses 75 to 94, wherein the ELR format comprises at least one mark symbol indicating a basic service set (BSS) color of the first PPDU.

Clause 96. The method of any one of clauses 75 to 95, wherein the ELR format comprises at least one mark symbol indicating a format of the first PPDU.

Clause 97. The method of any one of clauses 75 to 96, wherein the indication of disablement/deactivation of transmission with the ELR format is active for a time duration after receiving the first frame.

Clause 98. A computing device comprising: one or more processors; and memory storing instructions that, when executed by the one or more processors, cause the computing device to perform the method of any one of clauses 75 to 97.

Clause 99. A system comprising: a first station (STA) configured to perform the method of any one of clauses 75 to 97; and a second station (STA) configured to receive the first frame.

Clause 100. A computer-readable medium storing instructions that, when executed, cause the performance of the method of any one of clauses 75 to 97.

Clause 101. A method comprising transmitting, by a station (STA) to an access point (AP), a first frame indicating enablement, by the STA, of transmission with an enhanced long range (ELR) format.

Clause 102. The method of clause 101, further comprising transmitting, by the STA to the AP, a physical layer protocol data unit (PPDU) with the ELR format.

Clause 103. The method of clause 101 or clause 102, further comprising, based on a signal measurement of the PPDU being greater than a threshold, receiving, by the STA from the AP, a second frame indicating disablement, by the STA, of transmission with the ELR format.

Clause 104. A computing device comprising: one or more processors; and memory storing instructions that, when executed by the one or more processors, cause the computing device to perform the method of any one of clauses 101 to 103.

Clause 105. A system comprising: a station (STA) configured to perform the method of any one of clauses 101 to 103; and an access point (AP) configured to receive the first frame and send the second frame.

Clause 106. A computer-readable medium storing instructions that, when executed, cause performance of the method of any one of clauses 101 to 103.

Clause 107. A method comprising transmitting, by a first station (STA) to a second (STA), a first physical layer protocol data unit (PPDU) with an enhanced long range (ELR) format.

Clause 108. The method of clause 107, further comprising, based on a signal measurement of the first PPDU being greater than a threshold, receiving, by the first STA from the second STA, a first frame indicating disablement, by the first STA, of transmission with the ELR format.

Clause 109. The method of clause 107 or clause 108, wherein the first frame comprises a QoS Data frame or a Qos Null frame.

Clause 110. The method of any one of clauses 107 to 109, wherein the first frame comprises a high throughput (HT) Control field comprising an indication of disablement of transmission with the ELR format.

Clause 111. The method of any one of clauses 107 to 110, wherein the indication is provided in a link adaptation subfield of the HT Control field.

Clause 112. The method of any one of clauses 107 to 111, wherein the indication further indicates a modulation and coding scheme (MCS) feedback (MFB).

Clause 113. The method of any one of clauses 107 to 112, wherein the indication further indicates that the MFB comprises an unsolicited MFB based on the first PPDU.

Clause 114. The method of any one of clauses 107 to 113, wherein the MFB comprises an MCS indicating a data rate that is greater than or equal a first data rate.

Clause 115. The method of any one of clauses 107 to 114, wherein the first data rate is equal to a data rate of a second PPDU with a non-ELR format.

Clause 116. The method of any one of clauses 107 to 115, wherein the non-ELR format comprises one of: a non-high throughput (HT) PPDU; an HT PPDU; a high efficiency (HE) single user (SU) PPDU; an HE multi-user (MU) PPDU; an extremely high throughput (EHT) MU PPDU; and a non-ELR ultra high throughput (UHR) PPDU.

Clause 117. The method of any one of clauses 107 to 116, wherein the first data rate comprises at least one of: 6.0 Mbps; 7.3 Mbps; 8.1 Mbps; and 8.6 Mbps.

Clause 118. The method of any one of clauses 107 to 117, wherein an index of the MCS comprises 0.

Clause 119. The method of any one of clauses 107 to 118, wherein the indication indicates that the first STA is to use a non-ELR format for transmission to the second STA.

Clause 120. The method of any one of clauses 107 to 119, wherein the indication indicates that the first STA is not allowed to use an ELR format for transmission to the second STA.

Clause 121. The method of any one of clauses 107 to 120, wherein the first PPDU comprises an initial control frame.

Clause 122. The method of any one of clauses 107 to 121, wherein the first frame comprises an initial control response frame.

Clause 123. The method of any one of clauses 107 to 122, further comprising transmitting, by the first STA to the second STA, a second frame indicating enablement, by the first STA, of transmission with the ELR format.

Clause 124. The method of any one of clauses 107 to 123, wherein the second frame comprises at least one of: a quality of service (QoS) Data frame; a QoS Null frame; an action frame; and an (re)association request frame.

Clause 125. The method of any one of clauses 107 to 124, wherein the signal measurement comprises at least one of: a receive signal strength indicator; a signal to noise ratio; a signal to interference plus noise ratio; a received channel power indicator; and an error vector magnitude.

Clause 126. The method of any one of clauses 107 to 125, wherein the second STA comprises an access point.

Clause 127. The method of any one of clauses 107 to 126, wherein the ELR format comprises at least one mark symbol indicating a basic service set (BSS) color of the first PPDU.

Clause 128. The method of any one of clauses 107 to 127, wherein the ELR format comprises at least one mark symbol indicating a format of the first PPDU.

Clause 129. The method of any one of clauses 107 to 128, wherein the indication of disablement/deactivation of transmission with the ELR format is active for a time duration after receiving the first frame.

Clause 130. A computing device comprising: one or more processors; and memory storing instructions that, when executed by the one or more processors, cause the computing device to perform the method of any one of clauses 107 to 129.

Clause 131. A system comprising: a first station (STA) configured to perform the method of any one of clauses 107 to 129; and a second station (STA) configured to send the first frame.

Clause 132. A computer-readable medium storing instructions that, when executed, cause performance of the method of any one of clauses 107 to 129.

Clause 133. A method comprising transmitting, by a first station (STA) to a second (STA), a first physical layer protocol data unit (PPDU) with an enhanced long range (ELR) format.

Clause 134. The method of clause 133, further comprising receiving, by the first STA from the second STA, a second PPDU.

Clause 135. The method of clause 133 or clause 134, further comprising, based on a signal measurement of the second PPDU being greater than a threshold, transmitting, by the first STA to the second STA, a third PPDU with a non-ELR format.

Clause 136. A computing device comprising: one or more processors; and memory storing instructions that, when executed by the one or more processors, cause the computing device to perform the method of any one of clauses 133 to 135.

Clause 137. A system comprising: a first station (STA) configured to perform the method of any one of clauses 133 to 135; and a second station (STA) configured to receive the first PPDU and the third PPDU and send the second PPDU.

Clause 138. A computer-readable medium storing instructions that, when executed, cause performance of the method of any one of clauses 133 to 135.

An access point may perform a method comprising one or more operations. The access point may receive a first frame indicating enablement of transmission using an enhanced long range (ELR) format. The access point may receive a physical layer protocol data unit (PPDU) that is configured with the ELR format. The access point may send a second frame indicating disablement of transmission using the ELR format, for example, based on a signal measurement of the PPDU satisfying a threshold. The access point may receive a second PPDU that is configured with a non-ELR format, for example, after sending the second frame. The second frame may comprise a high throughput (HT) control field. The HT control field may comprise an indication of the disablement of transmission using the ELR format. The signal measurement may comprise a receive signal strength indicator (RSSI). The signal measurement may comprise a signal to noise ratio (SNR). The signal measurement may comprise a signal to interference plus noise ratio (SINR). The signal measurement may comprise a received channel power indicator (RCPI). The signal measurement may comprise an error vector magnitude (EVM). The ELR format may comprise at least one mark symbol indicating a basic service set (BSS) color of the PPDU. The ELR format may comprise at least one mark symbol indicating a format of the PPDU. The first frame may comprise a quality of service (QoS) Data frame. The first frame may comprise a QoS Null frame. The first frame may comprise an action frame. The first frame may comprise an (re)association request frame. The second frame may comprise a quality of service (QoS) Data frame or a QoS Null frame. The PPDU may comprise an initial control frame. The second frame may comprise an initial control response frame. The indication may indicate to use the non-ELR format for transmission to the access point. The non-ELR format may comprise one of: a non-high throughput (HT) PPDU; an HT PPDU; a high efficiency (HE) single user (SU) PPDU; an HE multi-user (MU) PPDU; an extremely high throughput (EHT) MU PPDU; or a non-ELR ultra high throughput (UHR) PPDU. The access point may determine the signal measurement of the PPDU. The access point may determine that the signal measurement of the PPDU satisfies the threshold, for example, by being greater than the threshold. The indicating disablement of transmission using the ELR format may be active for a time duration, for example, a time duration after sending the second frame. The indicating disablement of transmission using the ELR format may indicate (e.g., further indicate) a modulation and coding scheme (MCS) feedback (MFB). The indicating disablement of transmission using the ELR format may indicate (e.g., further indicate) that the MFB comprises an unsolicited MFB based on the PPDU. The MFB may comprise an MCS, for example, indicating a data rate that is greater than or equal to a data rate of a second PPDU that is configured with a non-ELR format. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to send the first frame and receive the second frame. A computer-readable medium may store instructions that, when executed, cause performance of the described method, additional operations, and/or include the additional elements.

An access point may perform a method comprising one or more operations. The access point may receive a first physical layer protocol data unit (PPDU) that is configured with an enhanced long range (ELR) format. The access point may send a first frame comprising an indication of disablement of transmission using the ELR format, for example, based on a signal measurement of the first PPDU satisfying a threshold. The access point may receive a second PPDU that is configured with a non-ELR format. The access point may determine a signal measurement of the first PPDU. The access point may determine that the signal measurement of the first PPDU satisfies the threshold, for example, by the signal measurement being greater than the threshold. The access point may receive a second frame indicating enablement of transmission using the ELR format. The indication of the disablement of transmission using the ELR format may be provided in a link adaptation subfield of a high throughput (HT) control field. The indication of the disablement of transmission using the ELR format may be active for a time duration, for example, a time duration after receiving the first frame. The indication of the disablement of transmission using the ELR format may indicate (e.g., further indicate) a modulation and coding scheme (MCS) feedback (MFB). The indication of the disablement of transmission using the ELR format may indicate (e.g., further indicate) that the MFB comprises an unsolicited MFB based on the first PPDU. The MFB may comprise an MCS, for example, indicating a data rate that is greater than or equal to a data rate of the second PPDU that is configured with the non-ELR format. The access point may be (e.g., comprise) a station. The non-ELR format may comprise one of: a non-high throughput (HT) PPDU; an HT PPDU; a high efficiency (HE) single user (SU) PPDU; an HE multi-user (MU) PPDU; an extremely high throughput (EHT) MU PPDU; or a non-ELR ultra high throughput (UHR) PPDU. The signal measurement may comprise a receive signal strength indicator (RSSI). The signal measurement may comprise a signal to noise ratio (SNR). The signal measurement may comprise a signal to interference plus noise ratio (SINR). The signal measurement may comprise a received channel power indicator (RCPI). The signal measurement may comprise an error vector magnitude (EVM). The ELR format may comprise at least one mark symbol indicating a basic service set (BSS) color of the PPDU. The ELR format may comprise at least one mark symbol indicating a format of the PPDU. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to receive the first frame. A computer-readable medium may store instructions that, when executed, cause performance of the described method, additional operations, and/or include the additional elements.

A station may perform a method comprising one or more operations. The station may send a first frame indicating enablement of transmission using an enhanced long range (ELR) format. The station may send a physical layer protocol data unit (PPDU) that is configured with the ELR format. The station may receive a second frame indicating disablement of transmission using the ELR format, for example, based on a signal measurement of the PPDU satisfying a threshold. The station may send a second PPDU that is configured with a non-ELR format, for example, after receiving the second frame. The second frame may comprise a high throughput (HT) control field, for example, comprising an indication of the disablement of transmission using the ELR format. The signal measurement may comprise a receive signal strength indicator (RSSI). The signal measurement may comprise a signal to noise ratio (SNR). The signal measurement may comprise a signal to interference plus noise ratio (SINR). The signal measurement may comprise a received channel power indicator (RCPI). The signal measurement may comprise an error vector magnitude (EVM). For example, satisfying the threshold may comprise the signal measurement of the PPDU being greater than the threshold. The ELR format may comprise at least one mark symbol indicating a basic service set (BSS) color of the PPDU. The ELR format may comprise at least one mark symbol indicating a format of the PPDU. The station may comprise: one or more processors; and memory storing instructions that, when executed by the one or more processors, cause the station to perform the described method, additional operations, and/or include the additional elements. A system may comprise: a station configured to perform the described method, additional operations, and/or include the additional elements; and an access point configured to receive the first frame and send (e.g., transmit) the second frame. A computer-readable medium may store instructions that, when executed, cause performance of the described method, additional operations, and/or include the additional elements.

An access point may perform a method comprising one or more operations. The access point (AP) may receive, from a station (STA), a first frame indicating enablement, by the STA, of transmission with an enhanced long range (ELR) format. The AP may receive, from the STA, a physical layer protocol data unit (PPDU) with the ELR format. The AP may send (e.g., transmit), to the STA, a second frame indicating disablement, by the STA, of transmission with the ELR format, for example, based on a signal measurement of the PPDU being greater than a threshold. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to send the first frame and receive the second frame. A computer-readable medium may store instructions that, when executed, cause performance of the described method, additional operations, and/or include the additional elements.

A station may perform a method comprising one or more operations. A first station (STA) may receive, from a second STA, a first physical layer protocol data unit (PPDU) with an enhanced long range (ELR) format. The first STA may send (e.g., transmit), to the second STA, a first frame indicating disablement, by the second STA, of transmission with the ELR format, for example, based on a signal measurement of the first PPDU being greater than a threshold. The first frame may comprise a QoS Data frame or a QoS Null frame. The first frame may comprise a high throughput (HT) Control field, for example, comprising an indication of disablement of transmission with the ELR format. The indication may be provided in a link adaptation subfield of the HT Control field. The indication may indicate (e.g., further indicate) a modulation and coding scheme (MCS) feedback (MFB). The indication may indicate (e.g., further indicate) that the MFB comprises an unsolicited MFB based on the first PPDU. The MFB may comprise an MCS, for example, indicating a data rate that is greater than or equal to a first data rate. For example, the first data rate may be equal to a data rate of a second PPDU with a non-ELR format. The non-ELR format may comprise one of: a non-high throughput (HT) PPDU; an HT PPDU; a high efficiency (HE) single user (SU) PPDU; an HE multi-user (MU) PPDU; an extremely high throughput (EHT) MU PPDU; or a non-ELR ultra high throughput (UHR) PPDU. The first data rate may comprise at least one of: 6.0 Mbps; 7.3 Mbps; 8.1 Mbps; and 8.6 Mbps. An index of the MCS may comprise a value (e.g., a value of 0). The indication may indicate that the second STA is to use a non-ELR format for transmission to the first STA. The indication may indicate that the second STA is not allowed to use an ELR format for transmission to the first STA. The first PPDU may comprise an initial control frame. The first frame may comprise an initial control response frame. The first STA may receive, from the second STA, a second frame indicating enablement, by the second STA, of transmission with the ELR format. The second frame may comprise at least one of: a quality of service (QoS) Data frame; a QoS Null frame; an action frame; and an (re)association request frame. The signal measurement may comprise at least one of: a receive signal strength indicator; a signal to noise ratio; a signal to interference plus noise ratio; a received channel power indicator; and an error vector magnitude. The first STA may comprise an access point. The ELR format may comprise at least one mark symbol indicating a basic service set (BSS) color of the first PPDU. The ELR format may comprise at least one mark symbol indicating a format of the first PPDU. The indication of disablement (e.g., deactivation) of transmission with the ELR format may be active for a time duration, for example, a time duration after receiving the first frame. The station may comprise: one or more processors; and memory storing instructions that, when executed by the one or more processors, cause the station to perform the described method, additional operations, and/or include the additional elements. A system may comprise: a first station configured to perform the described method, additional operations, and/or include the additional elements; and a second station configured to receive the first frame. A computer-readable medium may store instructions that, when executed, cause performance of the described method, additional operations, and/or include the additional elements.

A station may perform a method comprising one or more operations. The station (STA) may send (e.g., transmit), to an access point (AP), a first frame indicating enablement, by the STA, of transmission with an enhanced long range (ELR) format. The STA may send (e.g., transmit), to the AP, a physical layer protocol data unit (PPDU) with the ELR format. The STA may receive, from the AP, a second frame indicating disablement, by the STA, of transmission with the ELR format, for example, based on a signal measurement of the PPDU being greater than a threshold. The station may comprise: one or more processors; and memory storing instructions that, when executed by the one or more processors, cause the station to perform the described method, additional operations, and/or include the additional elements. A system may comprise: a station configured to perform the described method, additional operations, and/or include the additional elements; and an access point configured to receive the first frame and send (e.g., transmit) the second frame. A computer-readable medium may store instructions that, when executed, cause performance of the described method, additional operations, and/or include the additional elements.

A station may perform a method comprising one or more operations. A first station (STA) may send (e.g., transmit), to a second STA, a first physical layer protocol data unit (PPDU) with an enhanced long range (ELR) format. The first STA may receive, from the second STA, a first frame indicating disablement, by the first STA, of transmission with the ELR format, for example, based on a signal measurement of the first PPDU being greater than a threshold. The first frame may comprise a QoS Data frame or a Qos Null frame. The first frame may comprise a high throughput (HT) Control field, for example, comprising an indication of disablement of transmission with the ELR format. The indication may be provided in a link adaptation subfield of the HT Control field. The indication may indicate (e.g., further indicate) a modulation and coding scheme (MCS) feedback (MFB). The indication may indicate (e.g., further indicate) that the MFB comprises an unsolicited MFB based on the first PPDU. The MFB may comprise an MCS, for example, indicating a data rate that is greater than or equal a first data rate. The first data rate may be equal to a data rate of a second PPDU with a non-ELR format. The non-ELR format may comprise one of: a non-high throughput (HT) PPDU; an HT PPDU; a high efficiency (HE) single user (SU) PPDU; an HE multi-user (MU) PPDU; an extremely high throughput (EHT) MU PPDU; or a non-ELR ultra high throughput (UHR) PPDU. The first data rate may comprise at least one of: 6.0 Mbps; 7.3 Mbps; 8.1 Mbps; and 8.6 Mbps. An index of the MCS may comprise a value (e.g., a value of 0). The indication may indicate that the first STA is to use a non-ELR format for transmission to the second STA. The indication may indicate that the first STA is not allowed to use an ELR format for transmission to the second STA. The first PPDU may comprise an initial control frame. The first frame may comprise an initial control response frame. The first STA may send (e.g., transmit), to the second STA, a second frame indicating enablement, by the first STA, of transmission with the ELR format. The second frame may comprise at least one of: a quality of service (QoS) Data frame; a QoS Null frame; an action frame; and an (re)association request frame. The signal measurement may comprise at least one of: a receive signal strength indicator; a signal to noise ratio; a signal to interference plus noise ratio; a received channel power indicator; and an error vector magnitude. The second STA may comprise an access point. The ELR format may comprise at least one mark symbol indicating a basic service set (BSS) color of the first PPDU. The ELR format may comprise at least one mark symbol indicating a format of the first PPDU. The indication of disablement (e.g., deactivation) of transmission with the ELR format may be active for a time duration, for example, a time duration after receiving the first frame. The station may comprise: one or more processors; and memory storing instructions that, when executed by the one or more processors, cause the station to perform the described method, additional operations, and/or include the additional elements. A system may comprise: a first station configured to perform the described method, additional operations, and/or include the additional elements; and a second station configured to send (e.g., transmit) the first frame. A computer-readable medium may store instructions that, when executed, cause performance of the described method, additional operations, and/or include the additional elements.

A station may perform a method comprising one or more operations. A first station (STA) may send (e.g., transmit), to a second STA, a first physical layer protocol data unit (PPDU) with an enhanced long range (ELR) format. The first STA may receive, from the second STA, a second PPDU. The first STA may send (e.g., transmit), to the second STA, a third PPDU with a non-ELR format, for example, based on a signal measurement of the second PPDU being greater than a threshold. The station may comprise: one or more processors; and memory storing instructions that, when executed by the one or more processors, cause the station to perform the described method, additional operations, and/or include the additional elements. A system may comprise: a first station configured to perform the described method, additional operations, and/or include the additional elements; and a second station configured to receive the first PPDU and the third PPDU and send (e.g., transmit) the second PPDU. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices (MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by an access point, a first frame indicating enablement of transmission using an enhanced long range (ELR) format;
receiving a physical layer protocol data unit (PPDU) that is configured with the ELR format; and
based on a signal measurement of the PPDU satisfying a threshold, sending a second frame indicating disablement of transmission using the ELR format.

2. The method of claim 1, further comprising receiving, after sending the second frame, a second PPDU that is configured with a non-ELR format, wherein:
the second frame comprises a high throughput (HT) control field comprising an indication of the disablement of transmission using the ELR format.

3. The method of claim 1 or claim 2, wherein the signal measurement comprises at least one of:
a receive signal strength indicator (RSSI);
a signal to noise ratio (SNR);
a signal to interference plus noise ratio (SINR);
a received channel power indicator (RCPI); or
an error vector magnitude (EVM).

4. The method of any one of claims 1 to 3, wherein the ELR format comprises at least one mark symbol indicating at least one of:
a basic service set (BSS) color of the PPDU; or
a format of the PPDU.

5. The method of any one of claims 1 to 4, wherein the first frame comprises at least one of:
a quality of service (QoS) Data frame;
a QoS Null frame;
an action frame; or
an (re)association request frame.

6. The method of any one of claims 1 to 5, wherein the second frame comprises a quality of service (QoS) Data frame or a QoS Null frame.

7. The method of any one of claims 1 to 6, wherein the PPDU comprises an initial control frame and the second frame comprises an initial control response frame.

8. The method of any one of claims 1 to 7, wherein the indication indicates to use the non-ELR format for transmission to the access point.

9. The method of any one of claims 1 to 8, wherein the non-ELR format comprises one of:
a non-high throughput (HT) PPDU;
an HT PPDU;
a high efficiency (HE) single user (SU) PPDU;
an HE multi-user (MU) PPDU;
an extremely high throughput (EHT) MU PPDU; or
a non-ELR ultra high throughput (UHR) PPDU.

10. The method of any one of claims 1 to 9, further comprising:
determining the signal measurement of the PPDU; and
determining that the signal measurement of the PPDU satisfies the threshold by being greater than the threshold.

11. The method of any one of claims 1 to 10, wherein the indicating disablement of transmission using the ELR format is active for a time duration after sending the second frame.

12. The method of any one of claims 1 to 11, wherein the indicating disablement of transmission using the ELR format further indicates a modulation and coding scheme (MCS) feedback (MFB) and at least one of:
the indicating disablement of transmission using the ELR format further indicates that the MFB comprises an unsolicited MFB based on the PPDU; or
the MFB comprises an MCS indicating a data rate that is greater than or equal to a data rate of a second PPDU that is configured with a non-ELR format.

13. A computing device comprising:
one or more processors; and
memory storing instructions that, when executed by the one or more processors, cause the computing device to perform the method of any one of claims 1 to 12.

14. A system comprising:
an access point configured to perform the method of any one of claims 1 to 12; and
a station configured to send the first frame and receive the second frame.

15. A computer-readable medium storing instructions that, when executed, cause performance of the method of any one of claims 1-12.
